(19) Europäisches Patentamt
European Patent Office
Office européen des brevets

(11) **EP 2 549 323 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **12175844.5**

(22) Anmeldetag: **11.07.2012**

(51) Int Cl.:
***G02B 27/00*** *(2006.01)*

(54) **Variable Filterkompensation für hoch geöffnete Kameraobjektive**

Variable filter compensation for very wide camera lenses

Compensation de filtre variable pour objectif de caméra à grande ouverture

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2011 DE 102011107985**

(43) Veröffentlichungstag der Anmeldung:
**23.01.2013 Patentblatt 2013/04**

(73) Patentinhaber: **Carl Zeiss AG**
**73447 Oberkochen (DE)**

(72) Erfinder:
• **Jahn, Dirk**
  **99099 Erfurt (DE)**
• **Blahnik, Vladan**
  **73447 Oberkochen (DE)**

(74) Vertreter: **Witte, Weller & Partner Patentanwälte mbB**
**Postfach 10 54 62**
**70047 Stuttgart (DE)**

(56) Entgegenhaltungen:
| | |
|---|---|
| **EP-A2- 0 859 259** | **DE-A1- 3 030 205** |
| **JP-A- 55 055 309** | **JP-A- 2003 029 317** |
| **JP-A- 2007 266 186** | **US-A- 4 965 630** |
| **US-A- 5 311 362** | **US-A1- 2009 052 064** |

**Beschreibung**

Die vorliegende Erfindung betrifft ein Objektiv für eine Kamera, insbesondere für eine Digitalkamera, mit einem Gehäuse, einem an dem Gehäuse angeordneten Stellelement, und einem in mehrere Einstellungen einstellbaren Linsensystem, wobei das Linsensystem derart ausgebildet ist, dass in mindestens einer Einstellung eine Blendenzahl $F \leq 3$ ist.

Ein derartiges Objektiv ist beispielsweise aus der Druckschrift US 2009/0052064 A1 bekannt.

In Kameras mit kleiner einstellbarer Blendenzahl ist eine der signifikant auftretenden Aberrationen der sogenannte Öffnungsfehler. Bei dem Öffnungsfehler handelt es sich um die sogenannte sphärische Aberration. Der Öffnungsfehler ist umso größer, je weiter ein von einem Objektpunkt ausgehendes Lichtbündel in einem optischen System eines Objektivs aufgefächert wird, bevor es auf die Bildebene tritt. Die durch Ringzonen, die mit einem Abstand h von der optischen Achse beabstandet sind, einfallenden Strahlen schneiden sich in einem anderen Bildpunkt auf der optischen Achse als der paraxiale Bildpunkt. Der Öffnungsfehler kann durch die sogenannte Schnittweitendifferenz, d.h. den Abstand des Schnittpunkts des Strahlbündels mit der Einfallshöhe h zu dem Schnittpunkt des paraxialen Strahlenbündels, ausgedrückt werden. Diese Schnittweitendifferenz bzw. der Öffnungsfehler ist eine Funktion von h und wächst mit zunehmendem Abstand von der optischen Achse des Objektivs an. Grundsätzlich kann eine Abweichung der Schnittpunkte parallel zu der optischen Achse des Objektivs als auch quer zu der optischen Achse des Objektivs vorliegen. Insoweit im Rahmen dieser Anmeldung und im Folgenden von einer Schnittweitendifferenz gesprochen wird, ist hiermit jedoch lediglich die Schnittweitendifferenz parallel zu der optischen Achse des Objektivs, d.h. die Längsabweichung gemeint. Diese ist ein Maß für den Öffnungsfehler.

Der Öffnungsfehler nimmt mit zunehmendem Abstand h von der optischen Achse des Objektivs zu. Näherungsweise wächst er in quadratischer Abhängigkeit von h an. Der Öffnungsfehler wird somit erst bei einem gewissen Abstand von der optischen Achse relevant. Dies ist jedoch gerade für hoch geöffnete Objektive für Kameras der Fall. Unter hoch geöffneten Objektiven werden im Rahmen der vorliegenden Anmeldung solche Objektive verstanden, bei denen die Blendenzahl $\leq 3$ einstellbar bzw. eingestellt ist. Die Blendenzahl ist der Quotient aus der eingestellten Brennweite des Objektivs und dem Durchmesser der Eintrittspupille. Die Eintrittspupille hängt dabei von der Einstellung einer in dem Objektiv vorgesehenen Blende, beispielsweise einer als Irisblende ausgebildeten Aperturblende, ab. Ist die Blendenzahl klein bedeutet dies, dass die im Objektiv vorgesehene Blende weit geöffnet ist. Dabei ist der Abstand h eines noch durch die Blende tretenden Randstrahls, d.h. des am weitesten außen liegenden Lichtstrahls eines von einem bestimmten Objektpunkt ausgehenden Lichtbündels, groß. Für diesen ist dann auch der Öffnungsfehler groß. Folglich weist bei einer weit geöffneten Blende ein größerer Anteil von von einem Objektpunkt ausgehenden und auf der Bildebene in der Kamera auftreffenden Lichtstrahlen einen Öffnungsfehler auf, des Weiteren ist dieser für die Randstrahlen sehr groß. Dem kann entgegengewirkt werden, indem die Blendenöffnung klein eingestellt wird. Dies ist jedoch nicht immer gewünscht oder möglich, beispielsweise aufgrund der äußeren Lichtverhältnisse.

In Kameras sind vor der Bildebene häufig Filter verschiedener Dicken vorgesehen. Insbesondere ist bei Digitalkameras vor einem aufnehmenden Bildsensor, beispielsweise einem CCD-Sensor, ein Tiefpassfilter vorgesehen, um den sogenannten Moire-Effekt zu unterdrücken. Bei dem Moire-Effekt treten durch Überlagerung zweier feiner Raster im Rahmen eines Interferenzbildes grobe Raster auf, die unerwünscht sind. Dieser Moire-Effekt ist dem Fachmann grundsätzlich bekannt. Wie gesagt lässt er sich durch die Verwendung eines Tiefpassfilters unterdrücken. Des Weiteren können in einer Kamera noch andere Filter vorgesehen sein, beispielsweise zur Filterung von Infrarotstrahlung. Die Filter weisen abhängig vom Kameratyp unterschiedlicher Dicken auf. Darüber hinaus kann vorgesehen sein, dass bei einer Kamera bestimmten Typs die Anzahl und Art der Filter wechselbar ist, so dass sich insgesamt eine andere Dicke der verwendeten Filter ergibt. Ein Beispiel für eine solche Kamera ist in der Druckschrift DE 100 28 233 A1 gezeigt.

Ein Problem ist, dass auch ein solches Filterelement bestimmter Dicke d eine Änderung der Schnittweite hervorruft. Da sich die Filter in der Kamera üblicherweise direkt vor dem Bildaufnahmesensor befinden, liegen sie im konvergenten Strahlgang und verursachen so eine Schnittweitenverlängerung. Da die Dicke d der Filter einer Kamera bzw. die sich aus den unterschiedlichen Brechungsindizes und Dicken der Einzelfilter zusammensetzende Äquivalenzglasdicke von Kameratyp zu Kameratyp verschieden ist, ist ein bestimmtes Objektiv mit einem bestimmten Kameratyp bzw. nur mit Kameratypen verwendbar, deren Filterpaket die gleiche Äquivalenzglasdicke aufweist. Ein Objektiv ist stets so ausgelegt, dass es die durch die Filter eines bestimmten, zusammen mit dem Objektiv zu verwendenden Kameratyps verursachte Schnittweitenverlängerung ausgleicht. Auf dem Bildsensor ist der Öffnungsfehler dann vollständig kompensiert. Bei Verwendung zusammen mit einem anderen Kameratyp stimmt diese Kompensation dann nicht mehr und es tritt insbesondere bei geringer Blendenzahl bzw. weiter Blendenöffnung ein signifikanter Öffnungsfehler auf.

In der eingangs genannten Druckschrift US 2009/0052064 A1 wird ein planparalleles optisches Element bestimmter Dicke bei der Auslegung des Linsensystems berücksichtigt. Die Dicke dieses planparallelen optischen Elements soll dicker als die tatsächliche Dicke eines verwendeten Filters sein. Abhängig von einer Äquivalenzglasdicke eines tatsächlichen Filters soll dann ein entsprechend dünneres planparalleles optisches Element als dies bei der Auslegung berücksichtigt wurde in dem Objektiv vorgesehen werden. Dies bedeutet jedoch, dass das entsprechende, in dem Objektiv vorgesehene planparallele optische Element einmal für einen bestimmten Kameratyp vorgesehen wird. Soll das Objektiv zusammen mit einem anderen Kameratyp verwendet werden, wäre das planparallele optische Element in dem Objektiv auszutauschen. Dies ist jedoch nicht nur zeitaufwändig und kompliziert, es können auch unerwünschte Aberrationen hervorgerufen werden, etwa wenn ein neues planparalleles optisches Element falsch montiert wird, es verunreinigt ist oder schlichtweg versehentlich ein planparalleles optisches Element mit falscher Dicke montiert wird.

Die Druckschrift DE 30 30 205 A1 beschreibt eine Einrichtung zum Korrektionsausgleich des sich bei Variation der Blendenöffnung ändernden Öffnungsfehlers bei abbildenden Systemen von Bildaufzeichnungsgeräten, beispielsweise fotografischen Kameras. Die Druckschrift JP 55055309 A zeigt eine Linsenanordnung mit variabler Aberration. Dabei soll durch Ändern eines Luftabstands ermöglicht werden, sphärische Aberrationen sehr klein zu halten. Die Druckschrift EP 0 859 259 A2 zeigt darüber hinaus einen Adapter zum Korrigieren sphärischer Aberration eines Objektivs. Die Druckschriften US 4,965,630 A, US 5,311,362 A und JP 2007266186 A1 beschäftigen sich mit automatischen Regelungseinrichtungen einer sphärischen Aberration in Projektionssystemen, insbesondere in der Halbleiterfertigung. Weitere Objektive zeigen die Druckschriften JP 2003-29317 A und US 2009/0052064 A1.

Es ist daher eine Aufgabe der vorliegenden Erfindung, ein Objektiv für eine Kamera, insbesondere eine Digitalkamera, anzugeben, das auch für einen ungeübten Benutzer einfach an eine variable Filterdicke anpassbar und damit problemlos mit verschiedenen Kameratypen einsetzbar ist.

Gemäß einem ersten Aspekt wird daher ein Objektiv für eine Kamera vorgeschlagen, mit einem Gehäuse, einem an dem Gehäuse angeordneten Stellelement, und einem in mehrere Einstellungen einstellbaren Linsensystem, wobei das Linsensystem derart ausgebildet ist, dass in mindestens einer Einstellung eine Blendenzahl $F \leq 3$ ist, wobei das Linsensystem des Weiteren derart ausgebildet ist, dass eine Betätigung des Stellelements eine Bewegung zweier optischer Elemente relativ zueinander bewirkt, so dass eine Schnittweitendifferenz des Linsensystems zur Kompensation eines durch einen in der Kamera angeordneten Filter hervorgerufenen Öffnungsfehlers einstellbar ist, wobei das Linsensystem eine Fokussierungslinsengruppe aufweist, wobei die zwei optischen Elemente durch zwei benachbarte Linsenelemente der Fokussierungslinsengruppe gebildet sind, dadurch gekennzeichnet, dass die Fokussierungslinsengruppe vier Linsenelemente aufweist, mit den folgenden Daten:

| Fläche Nr. | Radius [mm] | Dicke [mm] | Glasart |
| --- | --- | --- | --- |
| 1' | 143,300000 | 4.000000 | NSF10 |
| 2' | 0,000000 | 6,052053 | |
| 3' | -55,831000 | 3,300000 | NLASF44 |
| 4' | -124,090000 | 0,682471 | |
| 5' | 43,714000 | 4,200000 | NLASF44 |
| 6' | 33,497000 | 6,277940 | |
| 7' | 50,481000 | 9,700000 | NSF1 |
| 8' | -311,710000 | - | |

Gemäß einem zweiten Aspekt wird daher ein Objektiv für eine Kamera vorgeschlagen, mit einem an dem Gehäuse angeordneten Stellelement, und einem in mehrere Einstellungen einstellbaren Linsensystem, wobei das Linsensystem derart ausgebildet ist, dass in mindestens einer Einstellung eine Blendenzahl $F \leq 3$ ist, wobei das Linsensystem des Weiteren derart ausgebildet ist, dass eine Betätigung des Stellelements eine Bewegung zweier optischer Elemente relativ zueinander bewirkt, so dass eine Schnittweitendifferenz des Linsensystems zur Kompensation eines durch einen in der Kamera angeordneten Filter hervorgerufenen Öffnungsfehlers einstellbar ist, dadurch gekennzeichnet, dass das Linsensystem eine bildseitig einer Aperturblende angeordnete Linsengruppe aufweist, wobei die zwei optischen Elemente durch zwei benachbarte Linsenelemente der Linsengruppe gebildet sind, und wobei ein bildseitig angeordnetes Linsenelement der benachbarten Linsenelemente ein asphärisches Linsenelement ist.

Wie bereits voranstehend ausgeführt wurde, ist in diesem Zusammenhang unter "Schnittweitendifferenz" die Schnittweitendifferenz in Längsrichtung, d.h. parallel zu einer optischen Achse des Linsensystems, zu verstehen. Insbesondere kann vorgesehen sein, dass die Schnittweitendifferenz für ein Strahlenbündel mit einem bestimmten Abstand h von einer optischen Achse des Linsensystems einstellbar ist. Auf diese Weise kann ein Verlauf der Schnittweitendifferenz über den Abstand h bzw. der Öffnungsfehler über den Abstand h derart beeinflusst werden, dass dieser insgesamt möglichst gering ist. Dabei verbleiben jedoch Restfehler, sogenannte Zonenfehler. Um diese möglichst gering zu halten, kann dabei insbesondere vorgesehen sein, dass der Abstand h, für den der Öffnungsfehler kompensiert wird, einem Abstand des Randstrahls bei maximal geöffneter Blende bzw. bei kleinster Blendenzahl des Objektivs oder bei halber maximaler Öffnung der Blende entspricht. Insbesondere kann jedoch auch die Korrektur des Öffnungsfehlers mittels optischer Elemente mit asphärischen Flächen erfolgen, was eine Kompensation des Öffnungsfehlers über den gesamten Abstandsbereich h ermöglicht.

Insbesondere ist es mittels des Stellelements möglich, dass die Schnittweitendifferenz des Linsensystems gezielt einstellbar ist. Eine Änderung der Schnittweite kann bei bekannten Objektiven für Kameras nicht gezielt vorgenommen werden. Zwar kann es vorkommen, dass die Schnittweite bzw. ein Öffnungsfehler eines Objektivs durch Einstellen anderer optischer Parameter des Objektivs variiert wird, ein Stellelement, mit dem gezielt die Schnittweite bzw. der von dem Objektiv vorgehaltene Öffnungsfehler einstellbar ist, ist jedoch nicht bekannt. Dies ermöglicht es jedoch auch einem Laien, das Objektiv an einem bestimmten Kameratyp anzupassen. Das Stellelement kann beispielsweise als Ringelement, das um eine optische Achse des Objektivs drehbar ist, vorgesehen sein. Das Stellelement kann aber beispielsweise auch als ein parallel zu der optischen Achse des Objektivs verschiebbarer Schieber ausgestaltet sein. Die Mechaniken, die die Bewegung des Stellelements in eine entsprechende Bewegung der zwei optischen Elemente relativ zu einander umsetzen, sind dem Fachmann grundsätzlich bekannt. Insbesondere ist somit eine Schnittweitendifferenz eines aus dem Objektiv austretenden Lichtstrahlenbündels des Linsensystems mittels des Stellelements einstellbar. Das aus dem Objektiv austretende Strahlenbündel weist somit in der Regel noch einen negativen Öffnungsfehler auf, dieser wird dann bei Durchtritt durch das planparallele Filterelement der Kamera kompensiert. Das Maß dieses durch das Objektiv vorgehaltenen, negativen Öffnungsfehlers des austretenden Strahlenbündels ist gezielt mittels des Stellelements einstellbar. Das Stellelement kann dabei kontinuierlich oder in diskreten Stufen bewegbar sein.

Ein weiterer maßgeblicher Vorteil des gemäß dem ersten Aspekt und dem zweiten Aspekt vorgeschlagenen Objektivs ist, dass aufgrund der gezielten Einstellbarkeit des Öffnungsfehlers bzw. der Schnittweitendifferenz des Linsensystems des Objektivs auch eine gezielte Herbeiführung eines Weichzeichnereffekts mittels des vorgeschlagenen Objektivs möglich ist. Natürlich soll mittels des Stellelements es zunächst einem Nutzer ermöglicht werden, das Objektiv mit verschiedenen Kameratypen und Filterdicken verwenden zu können. Entsprechend kann beispielsweise an einer Skala des Stellelements eine Markierung für einen jeweiligen Kameratyp vorgesehen sein, so dass der Nutzer das Stellelement auf die entsprechende Einstellung einstellt und somit das Objektiv mit dem betreffenden Kameratyp mit kompensiertem Öffnungsfehler nutzen kann. Darüber hinaus ist es so aber auch einem Nutzer, insbesondere einem erfahreneren Nutzer, möglich, die Schnittweitendifferenz bzw. den Öffnungsfehler gezielt aus dieser kompensierten Stellung heraus zu variieren, und so eine Weichzeichnung des Bildes zu erreichen. Insbesondere kann das Maß der Weichzeichnung abhängig von dem Bewegen des Stellelements aus der kompensierten Stellung heraus beeinflusst werden. Dies ermöglicht einem Nutzer der Kamera einen größeren Gestaltungsspielraum bei der Bildaufnahme und ist neben der variablen Filterkompensation weiterer signifikanter Vorteil des vorgeschlagenen Objektivs.

Auf dem technischen Gebiet der Mikroskope ist es bekannt, dass in einem Strahlengang zwischen dem zu beobachtenden Objekt und dem Auge des Benutzers Deckgläser unterschiedlicher Dicke angeordnet sind. Diese Deckgläser sind stets objektseitig von einem Objektiv des Mikroskops angeordnet. Als Beispiel hierfür sind die Druckschriften DE 38 12 745 A1, WO 95/02842 A1 und DE 31 13 802 A1 zu nennen. Die Anordnung des planparallelen Objekts erfolgt jedoch in allen Fällen objektseitig des Objektivs. Des Weiteren ist es auf dem technischen Gebiet der Mikroskope möglich, relativ nahe an dem planparallelen Objekt eine vollständige Korrektur des verursachten optischen Fehlers vorzunehmen. Dabei wird dann stets der Strahlengang so beeinflusst, dass eine bestmögliche Kompensation des Öffnungsfehlers vorliegt bereits wenn das Strahlenbündel aus dem Objektiv austritt. In der Problemstellung der vorliegenden Erfindung ist jedoch eine Korrektur eines bereits einem Strahlenbündel vorliegenden Öffnungsfehlers bildseitig des den Öffnungsfehler hervorrufenden Elements nicht möglich, da zwischen den Filtern einer Kamera und dem Bildsensor bzw. dem Film nicht genügend Platz besteht. Gegenüber einer Kompensation eines bereits vorhandenen Öffnungsfehlers durch verschiedene Deckglasdicken objektseitig des Objektivs ist der erfindungsgemäße Gedanke, mittels eines Stellelements einen bestimmten Öffnungsfehler gezielt hervorzurufen und vorzuhalten, um bildseitig des Objektivs durch Filter verursachte Probleme im Zusammenhang mit dem Öffnungsfehler zu vermeiden. Auch Weichzeichnungseffekte sind auf dem technischen Gebiet der Mikroskope generell unerwünscht und sollen somit auch gerade nicht hervorgerufen werden können. Diese unterschiedlichen Problemstellungen und Anforderungen an das Bild bzw. die Einstellmöglichkeiten des Bilds vermieden bisher einen Transport von auf dem technischen Gebiet der Mikroskope bekannter Lösungen auf das Gebiet der Objektive für Kameras, insbesondere Digitalkameras, wie die eingangs genannten Druckschriften US 2009/0052064 A1 und DE 100 28 233 A1 belegen.

Das Hervorrufen von Weichzeichnungseffekten mittels bestimmter Weichzeichnungsobjektive zeigt beispielsweise die Druckschrift DE 198 45 485 A1. Dabei ist beispielsweise mit einer asphärischen Fläche ein bestimmter Weichzeichnungseffekt in das Objektiv integriert. Es sind auch andere Verfahren zur Bewirkung eines Weichzeicheneffekts bekannt, beispielsweise Siebblenden oder Oberflächen mit einer Vielzahl von sphärischen Vertiefungen. Diese Weichzeichenobjektive sind jedoch ungeeignet, eine gezielte Wellenfront zu erzeugen, um eine bestimmte Filterdicke zu kompensieren. Des Weiteren ändert sich bei derartigen Objektiven zusammen mit dem Maß des Weichzeichnungseffekts auch stets eine andere Eigenschaft des Linsensystems, etwa dessen Brennweite. Man ist jedoch als Nutzer nicht dazu in der Lage, unter Beibehaltung der übrigen optischen Eigenschaften, insbesondere der Fokussierung, gezielt den Öffnungsfehler zu variieren, um eine Korrektur einer bestimmten Filterdicke oder ein Maß eines hervorgerufenen Weichzeichnungseffekts sensibel einzustellen. Auch auf diesem technischen Gebiet finden sich daher keine geeigneten Lösungen des erfindungsgemäßen Problems.

Gemäß einem dritten Aspekt der Erfindung wird die Verwendung eines Objektivs gemäß dem ersten Aspekt der Erfindung zur Kompensation eines durch einen in einer mit dem Objektiv zu beaufschlagenden Kamera, insbesondere einer Digitalkamera, angeordneten Filter hervorgerufenen Öffnungsfehlers vorgeschlagen. Insbesondere kann die Verwendung des Weiteren zur, insbesondere gezielten, Einstellung eines Weichzeichnereffekts vorgesehen sein.

Die Verwendung gemäß dem dritten Aspekt der Erfindung weist dieselben Vorteile wie das Objektiv gemäß dem ersten Aspekt oder dem zweiten Aspekt der Erfindung auf.

Die eingangs gestellte Aufgabe wird daher vollständig gelöst.

In einer Ausgestaltung der Erfindung ist vorgesehen, dass eine Betätigung des Stellelements eine Bewegung der zwei optischen Elemente parallel zu einer optischen Achse des Linsensystems relativ zueinander bewirkt.

Durch diese Ausgestaltung der Erfindung wird es insbesondere möglich, die zwei optischen Elemente durch zwei parallel zu der optischen Achse verschiebbare Linsenelemente des Linsensystems bereitzustellen. Des Weiteren kann bei einer Ausgestaltung des Stellelements als parallel zu der optischen Achse verschiebbarer Schieber eine besonders einfache Umsetzung der Bewegung des Stellelements auf die zwei optischen Elemente erfolgen.

In einer weiteren Ausgestaltung ist vorgesehen, dass die zwei optischen Elemente durch zwei benachbarte Linsenelemente des Linsensystems gebildet sind, wobei eine Betätigung des Stellelements eine Änderung eines Luftabstands zwischen den beiden benachbarten Linsenelementen bewirkt.

Die Variation eines Luftabstands zwischen zwei Linsenelementen, die die zwei optischen Elemente bilden, ermöglicht eine feine und sensible Einstellung der Schnittweitendifferenz bzw. des vorgehaltenen Öffnungsfehlers. Durch geeignete Radienwahl wird dieser Luftabstand insbesondere derart vorgesehen, dass durch seine Variation ein möglichst großer Einfluss auf den Öffnungsfehler des Objektivs genommen wird, aber ein möglichst geringer Einfluss auf andere optische Eigenschaften des Objektivs, wie beispielsweise die Fokussierung, genommen wird.

Gemäß dem ersten Aspekt der Erfindung ist vorgesehen, dass das Linsensystem eine Fokussierungslinsengruppe aufweist, wobei die zwei optischen Elemente durch zwei benachbarte Linsenelemente der Fokussierungslinsengruppe gebildet sind.

Innerhalb der Fokussierungslinsengruppe ist ohnehin eine Bewegung einzelner Linsenelemente parallel zu der optischen Achse des Linsensystems vorgesehen. Die Anordnung der beiden optischen Elemente innerhalb dieser Fokussierungslinsengruppe kann daher die insgesamt vorzusehende Mechanik zur Herbeiführung von Linsenbewegungen vereinfachen. Insbesondere kann vorgesehen sein, dass ein optisches Element bzw. ein Linsenelement der zwei optischen Elemente bzw. der zwei benachbarten Linsenelemente der Fokussierungslinsengruppe derart bewegbar ist, dass seine Position sowohl die Schnittweitendifferenz als auch die Fokussierung beeinflusst. Das andere der beiden optischen Elemente bzw. das andere der zwei benachbarten Linsenelemente ist dann derart bewegbar, dass im Wesentlichen nur Einfluss auf die Schnittweitendifferenz bzw. den Öffnungsfehler nicht jedoch auf die Fokussierung genommen wird. Somit wird es für einen Nutzer möglich, die Schnittweitendifferenz unter Beibehaltung der Fokussierung einzustellen bzw. eine durch eine Änderung der Schnittweitendifferenz hervorgerufene Änderung der Fokussierung wieder auszugleichen.

Gemäß dem ersten Aspekt der Erfindung ist vorgesehen, dass die Fokussierungslinsengruppe vier Linsenelemente aufweist, insbesondere mit den folgenden Daten:

| Fläche Nr. | Radius [mm] | Dicke [mm] | Glasart |
|---|---|---|---|
| 1' | 143,300000 | 4,000000 | NSF10 |
| 2' | 0,000000 | 6,052053 | |
| 3' | -55,831000 | 3,300000 | NLASF44 |
| 4' | -124,090000 | 0,682471 | |
| 5' | 43,714000 | 4,200000 | NLASF44 |
| 6' | 33,497000 | 6,277940 | |
| 7' | 50,481000 | 9,700000 | NSF1 |
| 8' | -311,710000 | - | |

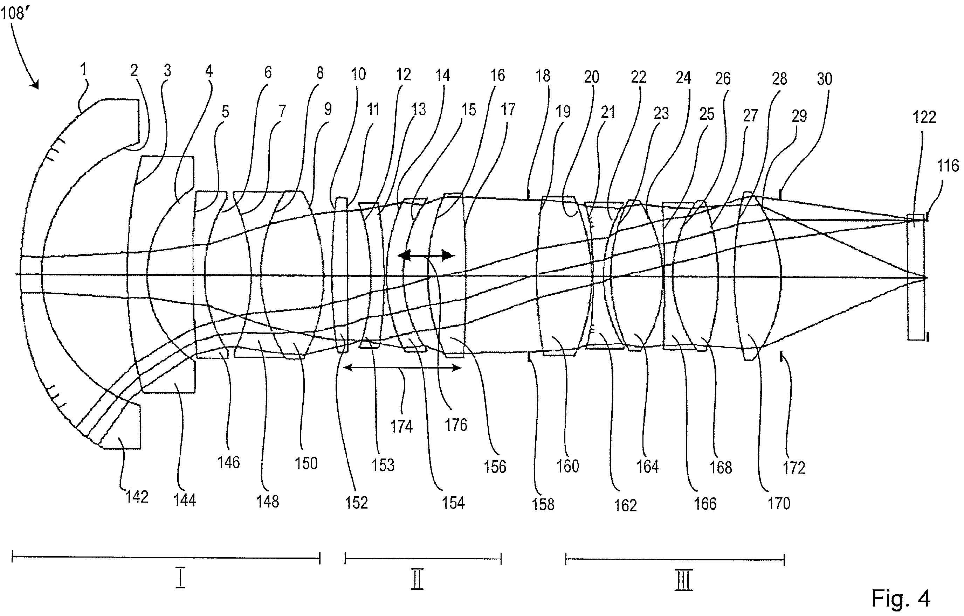

Die Fläche Nr. 1' entspricht dabei der in der Fig. 4 dargestellten Fläche Nr. 10. Die weiteren Angaben erfolgen in der für den Fachmann üblichen Form. Konvexe Radien sind positiv, konkave Radien negativ angegeben. Alle Angaben sind in Millimetern. In der Spalte "Dicke" ist jeweils der Abstand zu der nachfolgenden Fläche angegeben. Die Materialeigenschaften der angegebenen Glasarten sind dem Fachmann bekannt, insbesondere der jeweilige Brechungsindex und die jeweilige Abbe-Zahl, und ergeben sich darüber hinaus aus der nachstehend angegebenen Tabelle.

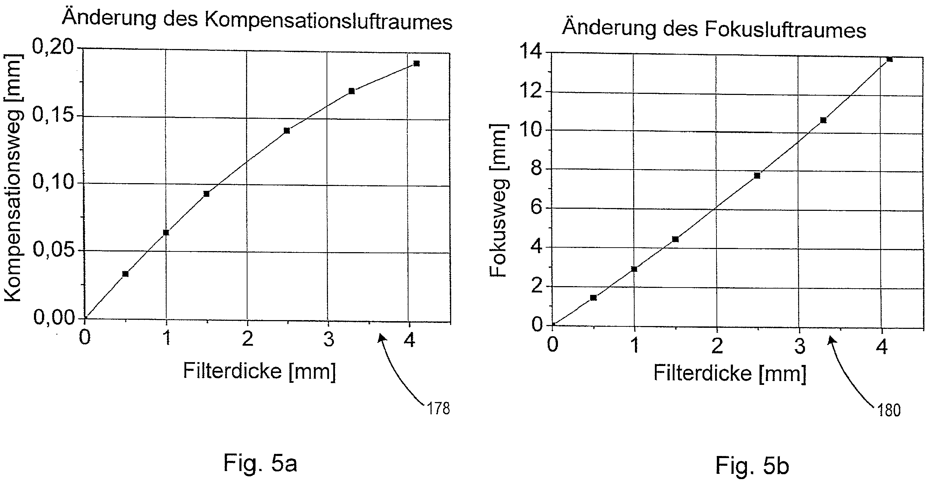

Die voranstehend beschriebene Fokussierungslinsengruppe stellt besonders gut eine Möglichkeit zur Variation des Öffnungsfehlers bzw. der Schnittweitendifferenz bereit, indem insbesondere ein Abstand zwischen dem Linsenelement mit den Flächen Nr. 5' und 6' und dem Linsenelement mit den Flächen Nr. 7' und 8', also die unter 6' angegebene Dicke, variiert wird, wie dies in dem Diagramm in der Fig. 5a dargestellt ist. Zur gleichzeitigen Beeinflussung einer Fokussierung werden die vier Linsenelemente der Fokussierungslinsengruppe gemeinsam bewegt bzw. verschoben.

In einer weiteren Ausgestaltung ist vorgesehen, dass das Linsensystem die folgenden Daten aufweist:

| Fläche Nr. | Radius [mm] | Dicke [mm] | Glasart |
|---|---|---|---|
| 1 | 90,116205 | 5,300000 | SPHM52 |
| 2 | 34,724000 | 21,419365 | |
| 3 | 120,570000 | 5,000000 | SFPL51 |
| 4 | 25,852000 | 11,707684 | |
| 5 | 220,670000 | 3,000000 | NSF57HT |
| 6 | 34,724000 | 11,951096 | |
| 7 | -44,668000 | 2,500000 | SFPL53 |
| 8 | 38,404000 | 16,100000 | NSK16 |
| 9 | -44,668000 | 2,500000 | |
| 10 | 143,300000 | 4,000000 | NSF10 |
| 11 | 0,000000 | 6,052053 | |
| 12 | -55,831000 | 3,300000 | NLASF44 |
| 13 | -124,090000 | 0,682471 | |
| 14 | 43,714000 | 4,200000 | NLASF44 |
| 15 | 33,497000 | 6,277940 | |
| 16 | 50,481000 | 9,700000 | NSF1 |
| 17 | -311,710000 | 17,211876 | |
| 18 | 0,000000 | 2,000000 | - |
| 19 | 116,310000 | 14,100000 | SFPL51 |
| 20 | -48,348000 | 0,300000 | |
| 21 | -183,481769 | 2,700000 | SLAH53 |
| 22 | 34,227000 | 1,921019 | |
| 23 | 42,474000 | 13,500000 | SFPL53 |
| 24 | -33,497000 | 0,300000 | |
| 25 | -530,880000 | 2,200000 | NLASF40 |
| 26 | 32,313000 | 11,500000 | SFPL53 |
| 27 | -58,294000 | 4,205019 | |
| 28 | 97,163000 | 11,800000 | SFPL51 |
| 29 | -34,724000 | 0,000000 | |
| 30 | 0,000000 | 36,397422 | - |

Alle Angabe sind in Millimetern. Ein Radius von "0,000000" bezeichnet dabei eine plane Fläche bzw. eine Blende, teilweise wird hier auch die Angabe "unendlich" verwendet, die ebenfalls angegeben sein könnte. Diese Nomenklatur ist dem Durchschnittsfachmann geläufig. Die Daten gelten für ein im Unendlichen liegendes Objekt. Die Dicke der Fläche 30 gibt entsprechend den Abstand zur Bildebene an. Die Flächen 1 und 21 sind als asphärische Flächen ausgebildet. Die asphärischen Flächen werden jeweils durch die nachfolgende Asphärenformel beschrieben:

$$P(h) = \frac{(1/r) \cdot h^2}{1 + \sqrt{1 - (1+K)(1/r)^2 h^2}} + c_1 h^4 + c_2 h^6 + ...$$

Dabei sind P die Pfeilhöhe der betreffenden Fläche parallel zur optischen Achse, h der radiale Abstand, d.h. der Abstand senkrecht zur optischen Achse, r der Krümmungsradius der betreffenden Fläche, K die konische Konstante und $c_1$, $c_2$, usw. die aufgeführten Asphärenkonstanten. Die Formel gilt auch für die übrigen asphärischen Flächen im Rahmen dieser Anmeldung. Die Abkürzung KSA steht also für Kegelschnittasphäre.

Dabei gelten für die Flächen 1 und 21 die folgenden Daten:

<div style="text-align:center">Asphärische Fläche Nr. 1:</div>

| Asphärenart: | konische Konstante: |
|---|---|
| KSA | 0,000000000E+00 |

| Asphärenkonstanten: | |
|---|---|
| $c_1$= | 2,138410558E-06 |
| $c_2$= | -7,813837178E-10 |
| $c_3$= | 1,267806896E-12 |
| $c_4$= | -1,341503588E-15 |
| $c_5$= | 9,878056126E-19 |
| $c_6$= | -3,869146575E-22 |
| $c_7$= | 6,576152649E-26 |

<div style="text-align:center">Asphärische Fläche Nr. 21:</div>

| Asphärenart: | konische Konstante: |
|---|---|
| KSA | 0,000000000E+00 |

| Asphärenkonstanten: | |
|---|---|
| $c_1$= | -1,002414545E-05 |
| $c_2$= | 5,931864360E-10 |
| $c_3$= | 7,136430627E-12 |

Die Kompensation eines Öffnungsfehlers bzw. zur Beeinflussung der Schnittweitendifferenz wird die unter 15 angegebene Dicke geändert. Insbesondere erfolgt dies wie es in Fig. 5a dargestellt ist, die dort angegebene Dicke ist auf den unter 15 angegeben Wert zu addieren. Insbesondere verringert sich dann entsprechend die Dicke der Fläche 17 entsprechend. Die für die Flächen 1 bis 30 angegebenen Werte für die Dicken gelten somit für eine Filterdicke von 0 mm.

Um die durch die Änderung der Dicke 15 verursachte Defokussierung zu kompensieren, werden die Flächen 10 bis 17 gemeinsam verschoben, wie dies in der Fig. 5b dargestellt ist. Dabei vergrößert sich entsprechend die Dicke 9 um den zu addierenden Wert aus dem Diagramm der Fig. 5b und die Dicke der Fläche 17 verringert sich entsprechend. Die angegebenen Daten gelten für ein im Unendlichen liegendes Objekt. Die Dicke der Fläche 30 gibt den Abstand zur Bildebene an.

Dieses Linsensystem weist die in der voranstehenden Ausgestaltung beschriebene Fokussierungslinsengruppe auf und stellt insgesamt besonders gute optische Eigenschaften bereit.

In einer weiteren Ausgestaltung der Erfindung ist vorgesehen, dass das Linsensystem des Weiteren derart ausgebildet ist, dass eine Betätigung des Stellelements eine Änderung einer Brennweite des Linsensystems bewirkt, so dass eine durch eine Änderung der Schnittweitendifferenz bewirkte Änderung der Brennweite kompensiert ist.

Auf diese Weise wird eine automatische Anpassung der Fokussierung bei Änderung der Schnittweitendifferenz bzw. des Öffnungsfehlers bewirkt. Insbesondere wird so automatisch die bei der Einstellung des Öffnungsfehlers entstehende Defokussierung ausgeglichen.

In einer weiteren Ausgestaltung der Erfindung, die mit allen übrigen Ausgestaltungen der Erfindung kombinierbar ist, kann vorgesehen sein, dass das Linsensystem des Weiteren derart ausgebildet ist, dass eine Betätigung des Stellelements keine Änderung der übrigen optischen Eigenschaften des Objektivs, insbesondere der Fokussierung und/oder der Blendenzahl, bewirkt.

Auf diese Weise wird eine Änderung der Schnittweitendifferenz des Objektivs bewirkt, ohne dass das Bild weitergehend beeinflusst wird. Eine Notwendigkeit Nachstellung des Objektivs, um bewirkte Änderungen wieder auszugleichen, entfällt somit.

Gemäß dem zweiten Aspekt der Erfindung ist vorgesehen, dass das Linsensystem eine bildseitig einer Aperturblende angeordnete, insbesondere dritte, Linsengruppe aufweist, wobei die zwei optischen Elemente durch zwei benachbarte Linsenelemente, insbesondere der dritten, Linsengruppe gebildet sind, und wobei ein bildseitig angeordnetes Linsenelement der benachbarten Linsenelemente ein asphärisches Linsenelement ist.

Mittels eines asphärischen Linsenelements kann der Öffnungsfehler besonders gut für alle Abstände zur optischen Achse korrigiert werden. Insbesondere kann die Form der asphärischen Linse derart ausgebildet sein, dass bei einer Variation eines Luftspalts zwischen dem bildseitig angeordneten Linsenelement der benachbarten Linsenelemente und dem objektseitig angeordneten Linsenelement der benachbarten Linsenelemente nur der Öffnungsfehler des Linsensystems beeinflusst wird. Insbesondere kann des Weiteren vorgesehen sein, dass ein objektseitig angeordnetes Linsenelement der benachbarten Linsenelemente direkt bildseitig einer Aperturblende angeordnet ist. Das bedeutet, dass sich zwischen dem objektseitig angeordneten Linsenelement der benachbarten Linsenelemente und der Aperturblende keine weiteren optischen Elemente, insbesondere Linsenelemente, befinden.

In einer weiteren Ausgestaltung kann vorgesehen sein, dass das asphärische Linsenelement ein asphärisches Kittglied ist, insbesondere mit den folgenden Daten:

| Fläche Nr. | Radius [mm] | Dicke [mm] | Glasart |
|------------|-------------|------------|---------|
| 1' | -200,648147 | 3,600000 | SLAH53 |
| 2' | 34,294956 | 12,905203 | SFPL53 |
| 3' | -48,773904 | | |

Asphärische Fläche Nr. 1':

| Asphärenart: | konische Konstante: |
|--------------|---------------------|
| KSA | 0,000000000E+00 |

Asphärenkonstanten:

$c_1 =$    -5,280909907E-06
$c_2 =$    1,504667518E-09
$c_3 =$    -8,408238291E-13
$c_4 =$    8,471013661E-16

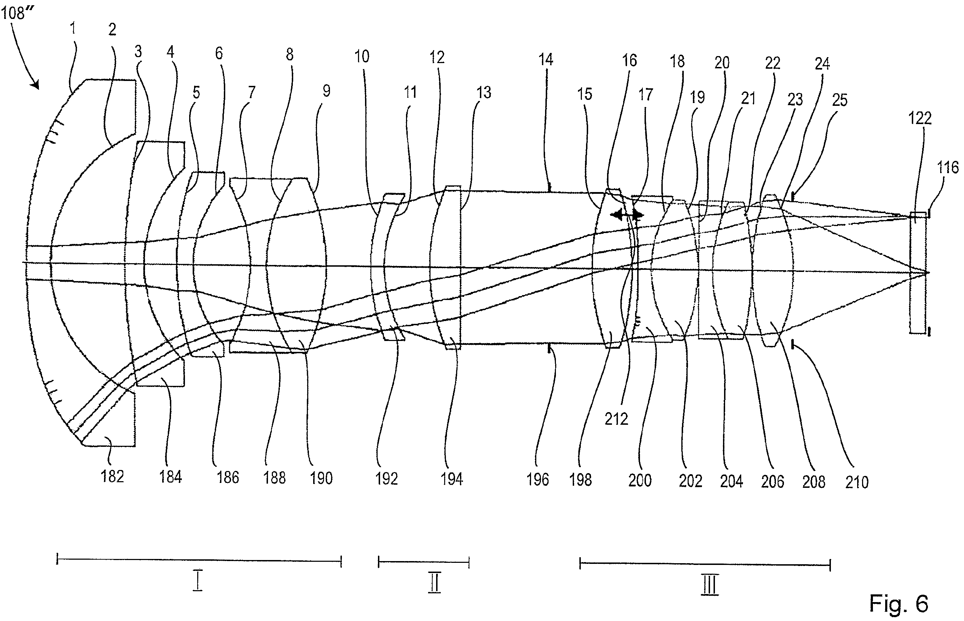

Die Fläche Nr. 1' entspricht der Fläche Nr. 17 in der Fig. 6. Die Fläche Nr. 2' bzw. 3' entsprechen den Flächen Nr. 18 bzw. 19. Alle Angaben in dieser und in anderen Darstellungen sind in Millimetern.

Die Verkittung der asphärischen Linse ermöglicht ein robustes Design mit hoher Abbildungsleistung, insbesondere da Reflexionen an einem Luftspalt vermieden werden.

In einer weiteren Ausgestaltung ist vorgesehen, dass das Linsensystem die folgenden Daten aufweist:

| Fläche Nr. | Radius [mm] | Dicke [mm] | Glasart |
|------------|-------------|------------|---------|
| 1 | 180,119729 | 6,500000 | SPHM52 |
| 2 | 38,688375 | 20,002248 | |
| 3 | 171,010743 | 5,000000 | SFPL51 |
| 4 | 36,946638 | 8,836063 | |
| 5 | 77,611721 | 4,500000 | NSF57HT |
| 6 | 32,107934 | 15,773184 | |

(fortgesetzt)

| Fläche Nr. | Radius [mm] | Dicke [mm] | Glasart |
|---|---|---|---|
| 7 | -43,084941 | 4,400000 | SFPL53 |
| 8 | 43,075059 | 16,399791 | NSK16 |
| 9 | -54,554119 | 10,988557 | |
| 10 | 52,586703 | 3,700000 | NLASF44 |
| 11 | 35,893774 | 12,496658 | |
| 12 | 56,108740 | 8,641316 | NSF1 |
| 13 | 0,000000 | 26,631826 | |
| 14 | 0,000000 | 11,683115 | - |
| 15 | 61,705916 | 11,114398 | SFPL51 |
| 16 | -70,026143 | 1,631465 | |
| 17 | -200,648147 | 3,600000 | SLAH53 |
| 18 | 34,294956 | 12,905203 | SFPL53 |
| 19 | -48,773904 | 0,300000 | |
| 20 | -1634,003859 | 3,700000 | NLASF40 |
| 21 | 43,330919 | 10,819207 | SFPL53 |
| 22 | -84,305387 | 0,100000 | |
| 23 | 63,360404 | 11,621284 | SFPL51 |
| 24 | -44,079624 | 0,000000 | |
| 25 | 0,000000 | 35,553756 | - |

Dabei sind die Flächen 1 und 17 als asphärische Flächen ausgebildet und werden durch die folgenden Daten beschrieben:

Asphärische Fläche Nr. 1:

Asphärenart:     konische Konstante:

KSA              0,000000000E+00

Asphärenkonstanten:

$c_1 =$     2,037022717E-06
$c_2 =$     -5,369449900E-10
$c_3 =$     1,625392430E-13
$c_4 =$     -1,343471905E-17

Asphärische Fläche Nr. 17:

Asphärenart:     konische Konstante:

KSA              0,000000000E+00

Asphärenkonstanten:

$c_1 =$     -5,280909907E-06
$c_2 =$     1,504667518E-09
$c_3 =$     -8,408238291E-13
$c_4 =$     8,471013661E-16

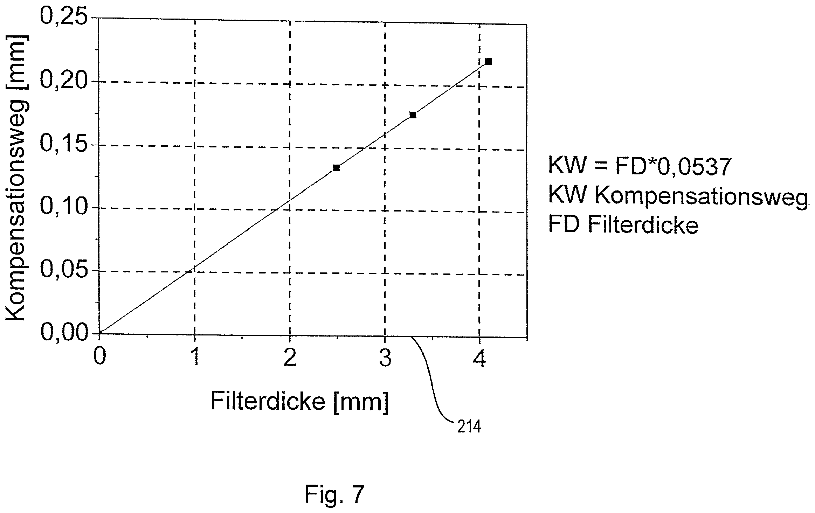

Die Kompensation eines Öffnungsfehlers bzw. zur Beeinflussung der Schnittweitendifferenz wird die unter 16 angegebene Dicke geändert. Insbesondere erfolgt dies wie es in Fig. 7 dargestellt ist, die dort angegebene Dicke ist auf den unter 16 angegeben Wert zu addieren. Insbesondere verringert sich dann entsprechend die Dicke der Fläche 19 entsprechend. Die für die Flächen 1 bis 25 angegebenen Werte für die Dicken gelten somit für eine Filterdicke von 0 mm. Zur Einstellung einer Fokussierung werden die Flächen 10 bis 13 gemeinsam verschoben, dabei vergrößert sich entsprechend die Dicke der Fläche 9 und die Dicke der Fläche 14 verringert sich. Die Daten gelten für ein im Unendlichen liegendes Objekt. Die Dicke der Fläche 25 gibt entsprechend den Abstand zur Bildebene an.

Diese Ausgestaltung stellt eine besonders gute Einstellung der Schnittweitendifferenz bzw. des Öffnungsfehlers über alle Abstände h bereit und ermöglicht gleichzeitig ein sensibles Einstellen der Schnittweitendifferenz bzw. des vorzuhaltenden Öffnungsfehlers ohne eine Beeinflussung anderer optischer Eigenschaften des Linsensystems, insbesondere bleibt die Fokussierung unbeeinflusst.

Die in allen Ausführungsbeispielen angegebenen Glasarten entsprechen den Bezeichnungen der Unternehmen Schott AG, Mainz, Deutschland und Ohara GmbH, Hofheim, Deutschland. Die Gläser können unter den angegebenen Bezeichnungen dort bezogen werden. Bezüglich der Materialeigenschaften der Glasarten gelten die Werte der nachstehenden Tabelle. Dabei bezeichnet $n_d$ die Brechzahl in einem mittleren Bereich des optischen Spektrums, nämlich bei der gelben Heliumlinie, d.h. 587,5618 nm. Als Dispersionsmaß ist die Abbe-Zahl $v_d$ angegeben, die sich zu

$$v_d = \frac{n_d - 1}{n_F - n_C}$$

ergibt, wobei $n_F$ die Brechzahl bei der blauen F-Linie von Wasserstoff (486,1327 nm) und nc der die Brechzahl bei der roten C-Linie des Wasserstoffs (656,2725 nm) angibt.

| Glasart | Brechzahl $n_d$ | Abbe-Zahl $v_d$ |
|---|---|---|
| SPHM52 | 1,61800 | 63,4 |
| SFPL51 | 1,49700 | 81,6 |
| NSF57HT | 1,84666 | 23,78 |
| SFPL53 | 1,43875 | 95,0 |
| NSK16 | 1,62041 | 60,32 |
| NSF10 | 1,72828 | 28,53 |
| NLASF44 | 1,80420 | 46,50 |
| NSF1 | 1,71736 | 29,62 |
| SLAH53 | 1,80610 | 40,9 |
| NLASF40 | 1,83404 | 37,30 |

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Ansicht einer Ausführungsform eines Objektivs gemäß einem ersten Aspekt der Erfindung;

Fig. 2 beispielhaft ein einen Öffnungsfehler in Abhängigkeit von einer Blendenzahl und einer Filterdicke einer Kamera beschreibendes Diagramm;

Fig. 3 eine Ausführungsform eines Stellelements;

Fig. 4 eine Ausführungsform eines Linsensystems für ein erfindungsgemäßes Objektiv;

Fig. 5a den Verlauf eines Kompensationswegs bzw. eines Luftabstands über einer mittels des Stellelements eingestellten Filterdicke bei der Ausführungsform in Fig. 4;

Fig. 5b den Verlauf eines zur Fokussierung eingestellten Luftabstands zwischen zwei optischen Elementen über der mittels des Stellelements eingestellten Filterdicke bei der Ausführungsform in Fig. 4;

Fig. 6 eine weitere Ausführungsform eines Linsensystems des erfindungsgemäßen Objektivs;

Fig. 7 den Verlauf eines Luftabstands zwischen zwei optischen Elementen zur Änderung des vorgehaltenen Öffnungsfehlers über der mittels des Stellelements eingestellten Filterdicke bei der Ausführungsform in Fig. 6;

Fig. 8 eine schematische Ansicht noch einer weiteren Ausführungsform eines Linsensystems des erfindungsgemäßen Objektivs;

Fig. 9a eine Einstellung maximaler Dicke eines durch zwei Glaskeilelemente gebildeten planparallelen optischen Elements bei der Ausführungsform in Fig. 8; und

Fig. 9b eine Einstellung verminderter Dicke des durch die Glaskeilelemente gebildeten planparallelen optischen Elements in Fig. 8.

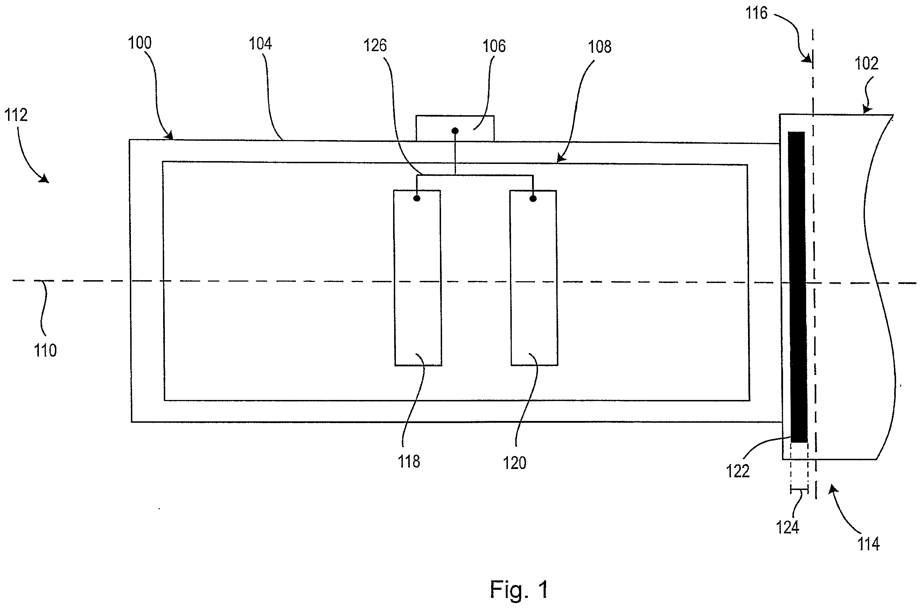

Fig. 1 zeigt eine schematische Ausführungsform eines Objektivs 100. Das Objektiv 100 ist dazu vorgesehen, mit einer Kamera 102, insbesondere einer Digitalkamera, zusammen verwendet zu werden. Das Objektiv 100 weist ein Gehäuse 104 auf, an dem ein Stellelement 106 angeordnet ist. Das Stellelement 106 ist in der Fig. 1 lediglich schematisch dargestellt. Bei dem Stellelement 106 kann es sich beispielsweise um einen Drehring, einen Drehknopf oder auch um ein Schiebeelement handeln. Das Stellelement 106 kann in diskreten Schritten bewegbar sein, vorzugsweise ermöglicht das Stellelement 106 jedoch eine kontinuierliche Einstellung.

Des Weiteren weist das Objekt 100 ein Linsensystem 108 auf, das in der schematischen Ansicht in Fig. 1 nicht im Einzelnen dargestellt ist. Wenn im Folgenden von einem Linsensystem 108 gesprochen wird, so kann dieses neben Linsenelementen auch Blenden aufweisen, die in den angegebenen Datenlisten als separate optische Flächen ausgewiesen sind. Das Linsensystem 108 erstreckt sich entlang einer optischen Achse 110 des Objektivs 100. Entsprechend seiner Anbringung an der Kamera 102 weist das Objektiv 100 eine Objektseite 112 auf, die auf ein zu filmendes Objekt zu richten ist, und des Weiteren eine Bildseite 114 auf, die zu der Kamera 102 weist. Das Objektiv 100 soll ein Bild in einer Bildebene 116 erzeugen, in der entsprechend im Falle einer analogen Kamera ein Film bzw. im Falle einer digitalen Kamera ein entsprechender Bildsensor angeordnet ist. Das Licht bewegt sich somit durch das Objektiv 100 hindurch in Richtung der Bildebene 116 bzw. des entsprechenden Bildsensors. Mit anderen Worten fällt das Licht von der Objektseite 112 in Richtung der Bildseite 114 durch das Objektiv 100.

Das Linsensystem 108 weist ein erstes optisches Element 118 und ein zweites optisches Element 120 auf, die mittels des Stellelements 106 relativ zueinander bewegbar sind. Das erste optische Element 118 und das zweite optische Element 120 bilden die "zwei optischen Elemente" im Sinne der Erfindung. Durch eine Betätigung des Stellelements 106 wird eine Bewegung der zwei optischen Elemente 118, 120 relativ zueinander bewirkt, so dass eine Schnittweitendifferenz des Linsensystems 108 einstellbar ist.

Die durch das Stellelement 106 gezielt vornehmbare Einstellung der Schnittweitendifferenz bzw. des an einem bildseitigen Ende des Objektivs vorliegenden Öffnungsfehlers dient dazu, einen durch einen Filter 122 der Kamera 102 hervorgerufenen Öffnungsfehler vorzuhalten. Da sich der Filter 122 in einem konvergierenden Strahlengang befindet, erzeugt er eine positive Schnittweitendifferenz, so dass entsprechend an einem bildseitigen Ende des Objektivs 100 eine negative Schnittweitendifferenz vorzuhalten ist. Ein Maß der vorzuhaltenden negativen Schnittweitendifferenz bzw. des vorzuhaltenden negativen Öffnungsfehlers ist abhängig von einer Filterdicke 124 des Filters 122.

Um die beiden optischen Elemente 118, 120 entsprechend relativ zueinander bewegen zu können, weist das Objektiv eine Stellmechanik 126 auf, die eine Betätigung des Stellelements 106 in eine entsprechende Bewegung der beiden optischen Elemente 118, 120 relativ zueinander bewirkt. Die Ausgestaltung einer solchen Stellmechanik ist dem Fachmann grundsätzlich bekannt und wird im Folgenden nicht näher beschrieben. Dies gilt für alle Ausführungsformen, sei es ob die optischen Elemente 118, 120 parallel zu der optischen Achse 110 oder senkrecht zu der optischen Achse 110 relativ zueinander bewegt werden.

Das Objektiv 100 weist neben dem dargestellten Stellelement 106 noch weitere Stellelemente auf, die in der schematischen Ansicht in der Fig. 1 nicht im Einzelnen dargestellt sind. Diese können beispielsweise zur Einstellung einer Öffnung einer Aperturblende oder zur Einstellung einer Brennweite des Linsensystems 108 vorgesehen sein. Das Linsensystem 108 ist derart ausgebildet, dass eine Blendenzahl $F \leq 3$ einstellbar ist.

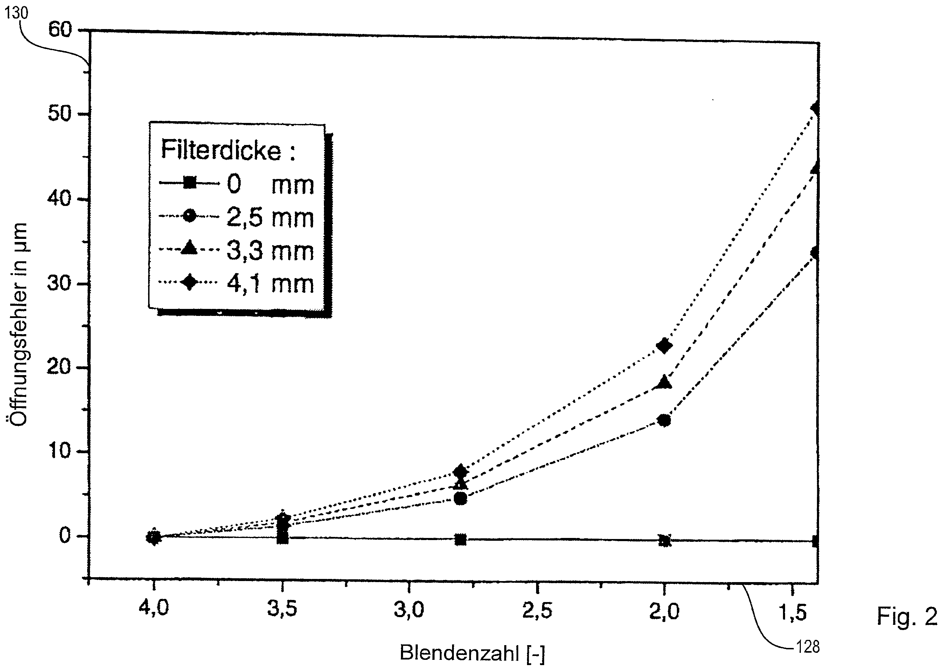

Fig. 2 zeigt ein Diagramm zur Verdeutlichung eines Verlaufs eines Öffnungsfehlers abhängig von einer Blendenzahl und einer Filterdicke des Filters 124. Dabei ist über einer x-Achse 128 die Blendenzahl und über einer y-Achse 130 der Öffnungsfehler aufgetragen. Wie zu erkennen ist, ist für den Fall, dass kein Filter vorgesehen ist, der Öffnungsfehler über alle Blendenzahlen kompensiert. Befinden sich in der Kamera 102 nun Filter 122 mit unterschiedlichen Filterdicken 124 liegt entsprechend eine Schnittweitenverlängerung und damit ein positiver Öffnungsfehler vor. Je dicker die Filterdicke 124, desto größer ist dabei der Öffnungsfehler. Des Weiteren ist der Öffnungsfehler von der Blendenzahl abhängig. Je kleiner die Blendenzahl ist, d.h. je größer die Öffnung einer in dem Objektiv vorgesehenen Blende ist, desto weiter ist der Abstand h eines Randstrahls von der optischen Achse 110. Mit zunehmendem Abstand h steigt dann auch der Öffnungsfehler. Wie in der Fig. 2 gut zu erkennen ist, steigt die Größe des Öffnungsfehlers überproportional zu der Öffnung der Blende an. Zu erkennen ist, dass bei einer Blendenzahl $F \leq 3$ der Öffnungsfehler einen signifikanten Betrag annimmt. So wird deutlich, dass Unterschiede in der Filterdicke verschiedener Kameratypen für hoch geöffnete Objektive unerwünschterweise eine Verringerung der Bildschärfe bzw. im Falle von Digitalkameras ein Verlust an Auflösung zur Folge haben können. Die angegeben Öffnungsfehler lassen mittels des vorgeschlagenen Objektivs 100 kompensieren. Insbesondere kann vorgesehen sein, dass mittels des Objektivs 100 Öffnungsfehler bis zu etwa 100 $\mu$m ausgeglichen bzw. kompensiert werden können.

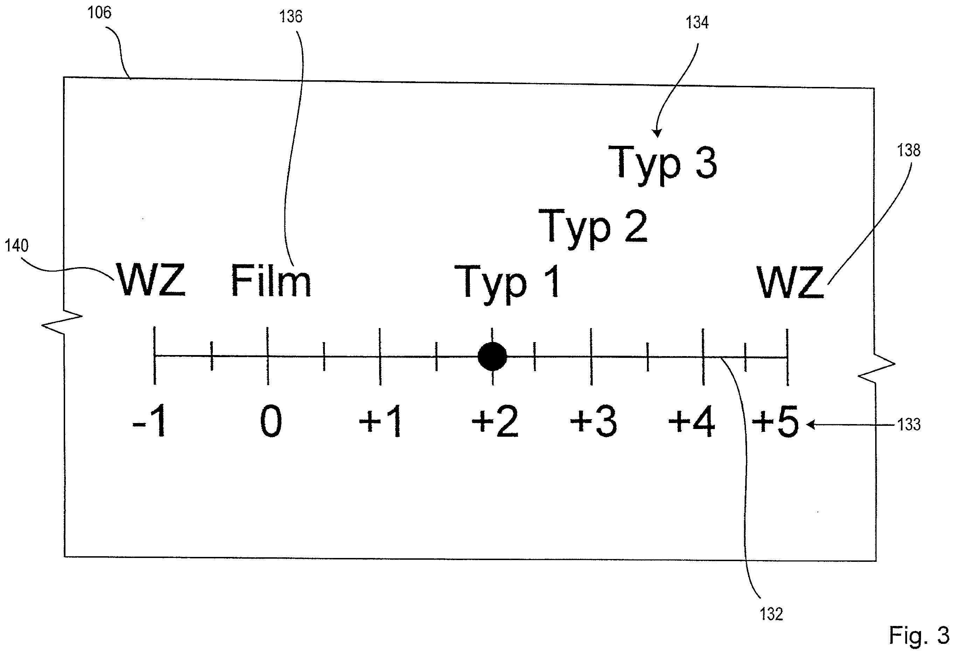

Die Fig. 3 zeigt eine mögliche Ausgestaltung eines Stellelements 106. Auf dem Stellelement 106 ist eine Skala 132 vorgesehen, auf der mittels mehrerer Zahlenwerte 133 die Filterdicke 124 in mm angegeben ist. Eine Einstellung "Null" entspricht dabei keinem vorgesehenen Filter 122, was beispielsweise bei einer analogen Kamera der Fall sein kann. Da einem Nutzer die Filterdicke eines bestimmten Kameratyps häufig nicht bekannt ist, kann die Skala mehrere Typenbezeichnungen 134 angeben, die mit einem bestimmten Zahlenwert 133 anhand ihrer Lage korrespondieren, so dass der Nutzer lediglich den Kameratyp auf dem Stellelement 106 suchen muss und dann eine entsprechende Filterdickeneinstellung vornehmen kann. Eine weitere Bezeichnung "Film" 136 kann die Einstellung für eine Kamera ohne vorgesetzten Filter angeben. Wichtig ist, dass mittels des Stellelements 106 auch über eine Filterdicke 124 von "Null" bzw. die Einstellung 136 hinaus eine Einstellung in den negativen Bereich vorgenommen werden kann. Des Weiteren kann über die größtmögliche Einstellung einer Filterdicke für einen bestimmten Kameratyp hinaus das Stellelement 106 und damit die Schnittweitendifferenz auch noch weiter hinaus für größere Filterdicken eingestellt werden. Diese Einstellungen über die für bestimmte Kameratypen notwendigen Einstellungen hinaus dient zur gewollten Herbeiführung eines Weichzeichnereffekts. Entsprechende Bezeichnungen 138, 140 können auf dem Stellelement 106 vorgesehen sein. Die Bezeichnung "WZ" aber auch die übrigen in der Fig. 3 eingegebenen Bezeichnungen sind für den deutschen Sprachraum gedacht, für entsprechend anderssprachige Länder sind auch andere Bezeichnungen denkbar. Mittels des Stellelements 106 ist es einem Nutzer auch ohne große Bedienerfahrung möglich, das Objektiv auf einen bestimmten Kameratyp einzustellen bzw. das Objektiv 100 mit verschiedenen Kameratypen zu verwenden. Dies wird durch die Typenbezeichnungen 134 wesentlich erleichtert. Ausgehend von einer so kompensierten Einstellung bietet das Stellelement 106 bzw. das Objektiv 100 einem erfahreneren Nutzer darüber hinaus die Möglichkeit, gezielt die Schnittweitendifferenz bzw. den Öffnungsfehler zu beeinflussen, um gewollt einen Weichzeichnereffekt im Bild herbeizuführen.

Die Fig. 4 zeigt eine Ausführungsform eines Linsensystems 108', das beispielsweise in dem Objektiv nach Fig. 1 Anwendung finden kann. Das Linsensystem 108' weist eine erste Linsengruppe I mit fünf Linsenelementen 142 bis 150 auf. Die Linsenelemente 148 und 150 sind verkittet. Des Weiteren ist eine Fokussierungslinsengruppe II vorgesehen, die vier Linsenelemente 152, 153, 154 und 156 aufweist. Eine Aperturblende des Linsensystems 108' ist mit 158 bezeichnet. Im Strahlengang hinter der Aperturblende 158 ist eine dritte Linsengruppe III mit sechs Linsenelementen 160 bis 170 angeordnet. Die Linsenelemente 166 und 168 sind verkittet. Ein bildseitiges Ende des Linsensystems 108' ist mit einer Ebene 172 bezeichnet.

Die Daten für die Flächen der Linsenelemente bzw. Blenden 142 bis 172 sind mit den Nummern 1 bis 30 bezeichnet, wobei sich die genauen Daten aus der nachstehenden Tabelle ergeben, die für eine Filterdicke von 0 mm gelten:

| Fläche Nr. | Radius [mm] | Dicke [mm] | Glasart |
|---|---|---|---|
| 1 | 90,116205 | 5,300000 | SPHM52 |
| 2 | 34,724000 | 21,419365 | |
| 3 | 120,5 70000 | 5,000000 | SFPL51 |
| 4 | 25,852000 | 11,707684 | |
| 5 | 220,670000 | 3,000000 | NSF57HT |
| 6 | 34,724000 | 11,951096 | |
| 7 | -44,668000 | 2,500000 | SFPL53 |
| 8 | 38,404000 | 16,100000 | NSK16 |
| 9 | -44,668000 | 2,500000 | |
| 10 | 143,300000 | 4,000000 | NSF10 |

(fortgesetzt)

| Fläche Nr. | Radius [mm] | Dicke [mm] | Glasart |
|---|---|---|---|
| 11 | 0,000000 | 6,052053 | |
| 12 | -55,831000 | 3,300000 | NLASF44 |
| 13 | -124,090000 | 0,682471 | |
| 14 | 43,714000 | 4,200000 | NLASF44 |
| 15 | 33,497000 | 6,277940 | |
| 16 | 50,481000 | 9,700000 | NSF1 |
| 17 | -311,710000 | 17,211876 | |
| 18 | 0,000000 | 2,000000 | - |
| 19 | 116,310000 | 14,100000 | SFPL51 |
| 20 | -48,348000 | 0,300000 | |
| 21 | -183,481769 | 2,700000 | SLAH53 |
| 22 | 34,227000 | 1,921019 | |
| 23 | 42,474000 | 13,500000 | SFPL53 |
| 24 | -33,497000 | 0,300000 | |
| 25 | -530,880000 | 2,200000 | NLASF40 |
| 26 | 32,313000 | 11,500000 | SFPL53 |
| 27 | -58,294000 | 4,205019 | |
| 28 | 97,163000 | 11,800000 | SFPL51 |
| 29 | -34,724000 | 0,000000 | |
| 30 | 0,000000 | 36,397422 | - |

Asphärische    Fläche Nr. 1:

Asphärenart:    konische Konstante:
KSA            0,000000000E+00

Asphärenkonstanten:
$c_1 =$            2,138410558E-06
$c_2 =$            -7,813837178E-10
$c_3 =$            1,267806896E-12
$c_4 =$            -1,341503588E-15
$c_5 =$            9,878056126E-19
$c_6 =$            -3,869146575E-22
$c_7 =$            6,576152649E-26

Asphärische                Fläche Nr. 21:
Asphärenart:    konische Konstante:
KSA            0,000000000E+00

Asphärenkonstanten:
$c_1 =$            -1,002414545E-05
$c_2 =$            5,931864360E-10
$c_3 =$            7,136430627E-12

Die Linsenelemente 152 bis 156 bzw. die Linsengruppe II kann entlang einem Fokusweg 174 variiert werden. Zwischen dem Linsenelement 154 und dem Linsenelement 156 kann ein Luftabstand bzw. ein Kompensationsweg 176 variiert werden, Luftabstand ist die unter der Fläche 15 angegebene Dicke. Eine Variation des Kompensationswegs 176 dient dazu, gezielt die Schnittweitendifferenz bzw. den Öffnungsfehler des Linsensystems 108' zu beeinflussen, sei es zur Kompensation der Dicke 124 des Filterelements 122, so dass sich in der Bildebene 116 kein Öffnungsfehler mehr ergibt, oder zur gewollten Herbeiführung eines Öffnungsfehlers und damit verbundenen Weichzeichnereffekts in der Bildebene 116.

Eine Änderung des Luftabstands bzw. Kompensationswegs 176 ist entsprechend mittels des Stellelements 106 möglich. Da eine Änderung des Luftabstands 176 in dem dargestellten Linsensystem 108' auch eine Änderung der Fokussierung bewirkt, bewirkt eine Betätigung des Stellelements 106 auch gleichzeitig eine Bewegung der Linsengruppe II entlang dem Fokusweg 174, um diese Änderung der Fokussierung zu kompensieren. Dabei vergrößert sich, wie im folgenden in Bezug auf die Fig. 5b erläutert wird, die unter der Fläche 9 angegebene Dicke, die unter der Fläche 17 angegebene Dicke verringert sich entsprechend. Das Linsensystem 108' ermöglicht es einem Nutzer somit, den Öffnungsfehler bzw. die Schnittweitendifferenz des Linsensystems 108' unter Beibehaltung der Fokussierung zu variieren.

Die Fig. 5a zeigt in einem Diagramm 178 ein Verlauf des Kompensationswegs 176, d.h. die Vergrößerung der Dicke der Fläche 15 und die Verringerung der Fläche 17 abhängig von der zu kompensierenden Filterdicke. Dieser ist über einer einstellbaren Filterdicke von 0 bis 4,1 mm aufgetragen. Die maximal einstellbare Filterdicke kann auch größer oder kleiner als 4,1 mm sein. Der über die minimale Filterdicke 0 und die maximal vorgesehene Filterdicke 4,1 hinausgehende Bereich zur Bereitstellung eines Weichzeichnereffekts kann beispielsweise mittels einer linearen Extrapolation des dargestellten Kurvenverlaufs fortgeführt werden, auch in einen negativen Bereich, so dass sich die voranstehende Darstellung der Vergrößerung bzw. Verkleinerung der Dicken der Flächen 15 und 17 umkehrt. Beispielhaft für den Kurvenverlauf werden folgende Punkte genannt: Bei einer Filterdicke von 0 beträgt der Kompensationsweg 0, bei einer Filterdicke von 0,5 mm beträgt der Kompensationsweg etwa 0,035 mm, bei einer Filterdicke von 2 mm beträgt der Kompensationsweg etwa 0,145 mm und bei einer Filterdicke von 4,1 mm beträgt der Kompensationsweg etwa 0,185 mm.

Die Fig. 5b zeigt ein Diagramm 180, in dem der eingestellte Fokusweg 174, d.h. die Vergrößerung der Dicke der Fläche 9 bzw. die Verringerung der Dicke der Fläche 17 über der Filterdicke aufgetragen ist. Hieraus ergibt sich, dass zur Bereitstellung der in den Fig. 5a und 5b geforderten Weglängen die in der Fig. 4 dargestellten Linsenelemente 154 und 156 entlang der optischen Achse 110 relativ zueinander verstellbar sein müssen. Dies kann bedeuten, dass entweder das Linsenelement 154 oder das Linsenelement 156 parallel zu der optischen Achse 110 bewegbar ist. In der in Fig. 4 dargestellten Ausführungsform steht das Linsenelement 154 fest und das Linsenelement 156 ist bewegbar ausgeführt.

Beispielhafte Punkte in dem Diagramm 180 ergeben sich wie folgt: Bei einer Filterdicke von 0 mm beträgt der Fokusweg 0 mm, bei einer Filterdicke von 1 mm beträgt der Fokusweg etwa 3 mm, bei einer Filterdicke von 2 mm beträgt der Fokusweg etwa 6,1 mm und bei einer Filterdicke 4,1 mm beträgt der Fokusweg etwa 14 mm. Zu einer gezielten Herbeiführung eines Weichzeichnungseffekts kann entsprechend zu dem Kompensationsweg auch der Fokusweg über die Grenzpunkte für Filterdicken von 0 mm und 4,1 mm hinaus entsprechend verlängert werden, auch in einen negativen Bereich, so dass sich auch hier die voranstehende Darstellung der Vergrößerung bzw. Verkleinerung der Dicken der Flächen 9 und 17 umkehrt

In Fig. 6 ist eine weitere Ausführungsform eines Linsensystems 108" dargestellt, das in dem Objektiv 100 verwendet werden kann. Das Linsensystem 108" weist eine erste Linsengruppe I mit fünf Linsen 182 bis 190 auf, wobei die Linsenelemente 188 und 190 verkittet sind. Des Weiteren ist eine zweite Linsengruppe II vorgesehen, die zwei Linsen 192 und 194 aufweist. Eine Aperturblende ist mit dem Bezugszeichen 196 bezeichnet. Bildseitig der Aperturblende 196 ist eine dritte Linsengruppe III vorgesehen, die sechs Linsenelemente 198 bis 208 aufweist, wobei die Linsenelemente 200 und 202 sowie die Linsenelemente 204 und 206 verkittet sind. Eine bildseitige Austrittsebene des Strahlenbündels aus dem Linsensystem 108" ist mit dem Bezugszeichen 210 bezeichnet. Die genauen Daten der Flächen 1 bis 25 sowie der verwendeten Linsenmaterialien sind der nachstehenden Tabelle zu entnehmen:

| Fläche Nr. | Radius [mm] | Dicke [mm] | Glasart |
|---|---|---|---|
| 1 | 180,119729 | 6,500000 | SPHM52 |
| 2 | 38,688375 | 20,002248 | |
| 3 | 171,010743 | 5,000000 | SFPL51 |
| 4 | 36,946638 | 8,836063 | |
| 5 | 77,611721 | 4,500000 | NSF57HT |
| 6 | 32,107934 | 15,773184 | |

(fortgesetzt)

| Fläche Nr. | Radius [mm] | Dicke [mm] | Glasart |
|---|---|---|---|
| 7 | -43,084941 | 4,400000 | SFPL53 |
| 8 | 43,075059 | 16,399791 | NSK16 |
| 9 | -54,554119 | 10,988557 | |
| 10 | 52,586703 | 3,700000 | NLASF44 |
| 11 | 35,893774 | 12,496658 | |
| 12 | 56,108740 | 8,641316 | NSF1 |
| 13 | 0,000000 | 26,631826 | |
| 14 | 0,000000 | 11,683115 | - |
| 15 | 61,705916 | 11,114398 | SFPL51 |
| 16 | -70,026143 | 1,631465 | |
| 17 | -200,648147 | 3,600000 | SLAH53 |
| 18 | 34,294956 | 12,905203 | SFPL53 |
| 19 | -48,773904 | 0,300000 | |
| 20 | -1634,003859 | 3,700000 | NLASF40 |
| 21 | 43,330919 | 10,819207 | SFPL53 |
| 22 | -84,305387 | 0,100000 | |
| 23 | 63,360404 | 11,621284 | SFPL51 |
| 24 | -44,079624 | 0,000000 | |
| 25 | 0,000000 | 35,553756 | - |

Asphärische Fläche Nr. 1:

Asphärenart:      konische Konstante:

KSA                0,000000000E+00

Asphärenkonstanten:

$c_1 =$      2,037022717E-06
$c_2 =$      -5,369449900E-10
$c_3 =$      1,625392430E-13
$c_4 =$      -1,343471905E-17

Asphärische Fläche Nr. 17:

Asphärenart:      konische Konstante:

KSA                0,000000000E+00

Asp härenkonstan ten:

$c_1 =$      -5,280909907E-06
$c_2 =$      1,504667518E-09
$c_3 =$      -8,408238291E-13
$c_4 =$      8,471013661E-16

Wie in allen Tabellen und Diagrammen sind die Dimensionsangaben in Millimetern ausgeführt. Die Materialeigenschaften der angegebenen Glasmaterialien, insbesondere der Brechungsindex und die Abbe-Zahl, sind dem Fachmann anhand der Materialangaben bekannt.

Das Linsensystem 108" weist ein Linsenelement 200 innerhalb der dritten Linsengruppe III auf, dessen objektseitige Fläche asphärisch ausgestaltet ist. Das Linsenelement 200 ist mit dem Linsenelement 202 verkittet. Dieses asphärische Kittglied 200, 202 ist mittels des Stellelements 106 bewegbar, so dass ein Luftabstand 212 zu einem benachbarten Linsenelement 198 einstellbar ist. Die Flächen des asphärischen Kittsglieds sind derart gestaltet, dass eine Variation des Luftabstands 212 nur den Öffnungsfehler des Linsensystems 108" bzw. dessen Schnittweitendifferenz beeinflusst. Grundsätzlich kann entweder das Linsenelement 198 oder das asphärische Kittglied 200, 202 bewegbar sein. In der Ausführungsform in Fig. 6 ist das asphärische Kittglied 200, 202 bewegbar. Es kann jedoch von Vorteil sein, statt des asphärischen Kittglieds 200, 202 das Linsenelement 198 zu bewegen, insbesondere etwa weil das zu bewegende Gewicht des Linsenelements 198 geringer ist als das Gewicht des asphärischen Kittglieds 200, 202 oder weil die Dicke eines Luftspalts zwischen dem asphärischen Kittglied 200, 202 und dem benachbarten Linsenelement 204, 206 keine ausreichende Bewegung des asphärischen Kittgliedes 200, 202 zulässt.

Fig. 7 zeigt ein Diagramm 214, in dem ein Kompensationsweg des asphärischen Kittglieds 200, 202, d.h. der Luftabstand 212 über der mittels des Stellelements 106 eingestellten Filterdicke aufgetragen ist. Es ergibt sich ein linearer Verlauf des Kompensationswegs 212 über der Filterdicke. Der Kompensationsweg bzw. Luftabstand 212 ist gleich der eingestellten Filterdicke mal 0,0537 für das in der Fig. 6 dargestellte Linsensystem 108". Zur gewollten Herbeiführung eines Weichzeichnereffekts jenseits der dargestellten Grenzen von 0 mm und 4,1 mm Filterdicke kann die Gerade entsprechend extrapoliert werden.

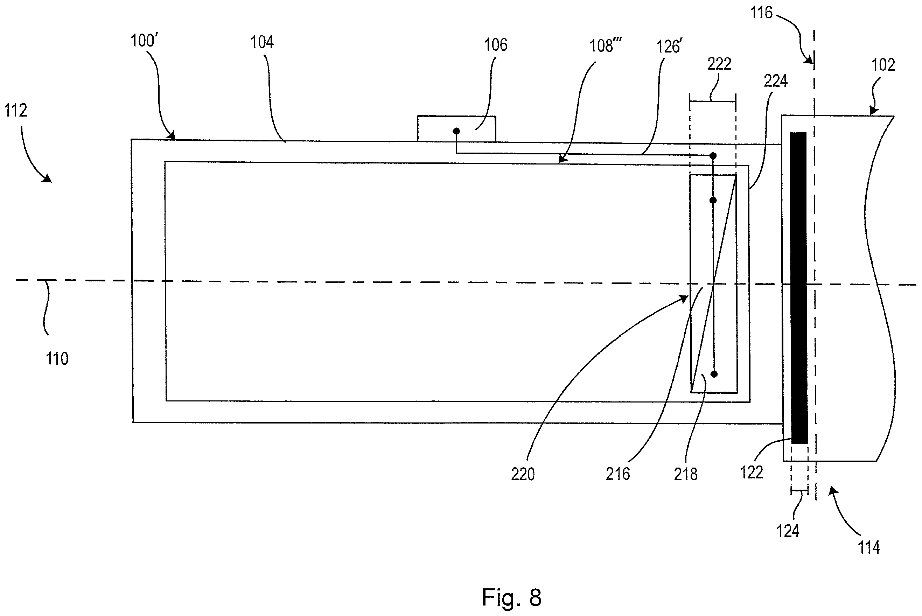

Fig. 8 zeigt eine weitere Ausführungsform eines Linsensystem 108''', das in einer Ausführungsform des Objektivs 100' zum Einsatz kommen kann. Gleiche Elemente sind in der Fig. 8 mit gleichen Bezugszeichen bezeichnet und wirken auf ähnliche Weise. Im Folgenden wird lediglich auf die Unterschiede eingegangen.

Das Linsensystem 108''' ist in der Fig. 8 lediglich schematisch dargestellt. Auf der Bildseite 114 des Linsensystems 108''' schließt das Linsensystem 108''' mit einem ersten Glaskeilelement 216 und einem zweiten Glaskeilelement 218 ab, die gemeinsam ein planparalleles optisches Element 220 bilden. Eine Dicke 222 des planparallelen optischen Elements 220 kann mittels des Stellelements 106 variiert werden. Eine entsprechende relative Bewegung des ersten Glaskeilelements 216 und des zweiten Glaskeilelements 218 zueinander wird durch eine Stellmechanik 126' bewirkt, die eine Bewegung des Stellelements 106 in einer entsprechenden Bewegung der Glaskeilelemente 216, 218 relativ zueinander umsetzt. Der Aufbau einer solchen Stellmechanik 126' ist dem Fachmann grundsätzlich bekannt und wird daher nicht näher beschrieben. Insbesondere schließt das planparallele optische Element 220 das Linsensystem 108''' auf der Bildseite ab und dient damit zum Schutz der übrigen Linsenelemente (nicht dargestellt) des Linsensystems 108'''. Das planparallele optische Element 220 liegt daher an einem bildseitigen Ende 224 des Linsensystems 108'''.

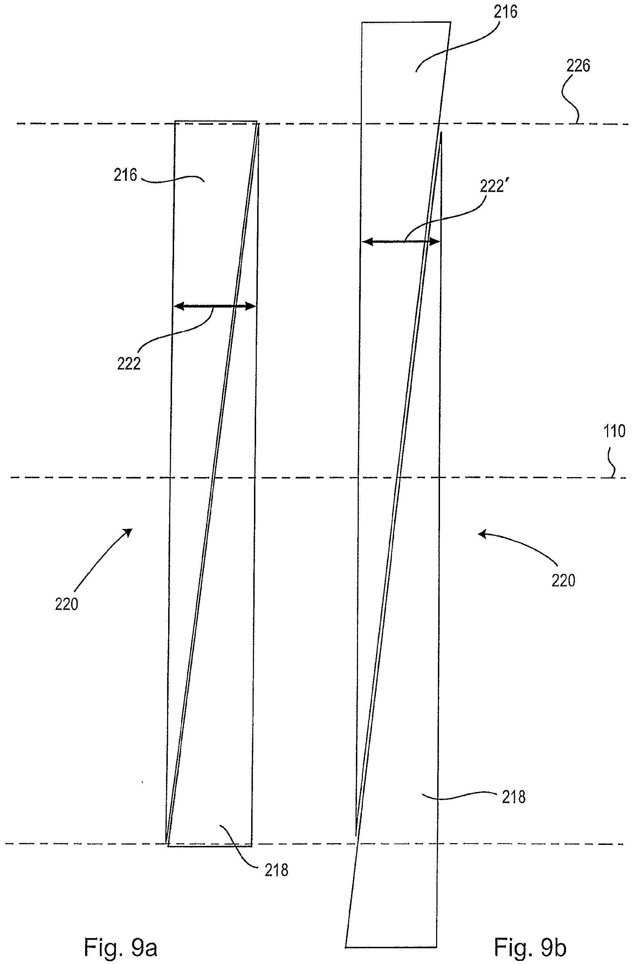

Die Fig. 9a zeigt eine Einstellung des planparallelen optischen Elements 220, bei der eine Dicke 222 des planparallelen optischen Elements 220 maximal ist. Diese Dicke ist bis zu einer Grenze 226 des durch das planparallele optische Element 220 tretenden Strahlenbündels gegeben. Das Linsensystem 108''' ist derart ausgebildet, dass für diese maximale Dicke 222 der Öffnungsfehler des Linsensystems 108''' kompensiert ist bzw. die Schnittweitendifferenz 0 beträgt. Durch Verschiebung der Glaskeilelemente 216 und 218 relativ zueinander kann die Dicke 222 nunmehr verändert werden. Unter "maximale Dicke" ist dabei diejenige Dicke des planparallelen optischen Elements 220 zu verstehen, bei der der Öffnungsfehler des Linsensystems 108''' für eine Filterdicke von 0 mm kompensiert ist. Es ist jedoch vorgesehen, dass die Dicke 222 innerhalb der Grenze 226 des Strahlenbündels noch etwas erhöht werden kann, um gezielt einen Weichzeichnereffekt ausgehend von der "maximalen Dicke" in beide Richtungen, d.h. sowohl mittels positiver als auch mittels negativer Schnittweitendifferenz bereitstellen zu können.

Werden die Glaskeilelemente 216, 218 auseinandergezogen, verringert sich die Dicke 222 auf eine geringere Dicke 222' wie es in Fig. 9b dargestellt ist. Mittels des Stellelements 106 kann dadurch die Dicke des planparallelen optischen Elements 220 um eine Äquivalenzglasdicke des Filters 122 der Kamera 102 verringert werden. Auf diese Weise wird ein negativer Öffnungsfehler bzw. ein negative Schnittweitendifferenz durch das Objektiv 100' vorgehalten, so dass eine durch den Filter 122 hervorgerufene positive Schnittweitendifferenz bzw. ein positiver Öffnungsfehler in der Bildebene 116 letztlich kompensiert ist.

Bezugszeichenliste

| | |
|---|---|
| 1-30 | Linsenflächen bzw. Aperturen |
| 100 | Objektiv |
| 102 | Kamera |
| 104 | Gehäuse |
| 106 | Stellelement |

| | |
|---|---|
| 108 | Linsensystem |
| 110 | Optische Achse |
| 112 | Objektseite |
| 114 | Bildseite |
| 116 | Bildebene |
| 118 | erstes optisches Element |
| 120 | zweites optisches Element |
| 122 | Filter |
| 124 | Filterdicke |
| 126 | Stellmechanik |
| 128 | x-Achse |
| 130 | y-Achse |
| 132 | Skala |
| 133 | Zahlenwerte |
| 134 | Typenbezeichnungen |
| 136 | Typenbezeichnung Film (analog) |
| 138 | Typenbezeichnung Weichzeichnereffekt |
| 140 | Typenbezeichnung Weichzeichnereffekt |
| 142-172 | Linsenelemente bzw. Blenden |
| 174 | Fokusabstand |
| 176 | Luftabstand |
| 178 | Diagramm Luftabstand |
| 180 | Diagramm Fokusweg |
| 182-210 | Linsenelemente bzw. Blenden |
| 212 | Luftabstand |
| 214 | Diagramm Luftabstand |
| 216 | erstes Keilelement |
| 218 | zweites Keilelement |
| 220 | planparalleles Element |
| 222 | Dicke des planparallelen Elements |
| 224 | bildseitiges Ende |
| 226 | Grenze des Strahlenbündels |

## Patentansprüche

1. Objektiv (100) für eine Kamera (102) mit einem Gehäuse (104), einem an dem Gehäuse (104) angeordneten Stellelement (106), und einem in mehrere Einstellungen einstellbaren Linsensystem (108), wobei das Linsensystem (108) derart ausgebildet ist, dass in mindestens einer Einstellung eine Blendenzahl $F \leq 3$ ist, wobei das Linsensystem (108) des Weiteren derart ausgebildet ist, dass eine Betätigung des Stellelements (106) eine Bewegung zweier optischer Elemente (118, 120; 154, 156; 198, 200; 216, 218) relativ zueinander bewirkt, so dass eine Schnittweitendifferenz des Linsensystems (108) zur Kompensation eines durch einen in der Kamera (102) angeordneten Filter hervorgerufenen Öffnungsfehlers einstellbar ist, **dadurch gekennzeichnet, dass** das Linsensystem (108) eine bildseitig einer Aperturblende (196) angeordnete Linsengruppe (III) aufweist, wobei die zwei optischen Elemente (118, 120; 154, 156; 198, 200; 216, 218) durch zwei benachbarte Linsenelemente (198, 200) der Linsengruppe (III) gebildet sind, und wobei ein bildseitig angeordnetes Linsenelement (200) der benachbarten Linsenelemente (198, 200) ein asphärisches Linsenelement ist.

2. Objektiv nach Anspruch 1, **dadurch gekennzeichnet, dass** das asphärische Linsenelement (200) ein asphärisches Kittglied (200, 202) ist, mit den folgenden Daten

| Fläche Nr. | Radius [mm] | Dicke [mm] Glasart |
|---|---|---|
| 1' | -200,648147 | 3,600000 SLAH53 |
| 2' | 34,294956 | 12,905203 SFPL53 |
| 3' | -48,773904 | |

| Asphärische | Fläche Nr. 1': |
| --- | --- |
| Asphärenart: KSA | konische Konstante: 0,000000000E+00 |

Asphärenkonstanten:

$c_1 =$     -5,280909907E-06

$c_2 =$     1,504667518E-09

$c_3 =$     -8,408238291E-13

$c_4 =$     8,471013661E-16

3.   Objektiv nach Anspruch 2, **dadurch gekennzeichnet, dass** das Linsensystem (108) die folgenden Daten aufweist:

Aperturfläche: 14

| Fläche Nr. | Radius [mm] | Dicke [mm] | Glasart |
| --- | --- | --- | --- |
| 1 | 180,119729 | 6,500000 | SPHM52 |
| 2 | 38,688375 | 20,002248 | |
| 3 | 171,010743 | 5,000000 | SFPL51 |
| 4 | 36,946638 | 8,836063 | |
| 5 | 77,611721 | 4,500000 | NSF57HT |
| 6 | 32,107934 | 15,773184 | |
| 7 | -43,084941 | 4,400000 | SFPL53 |
| 8 | 43,075059 | 16,399791 | NSK16 |
| 9 | -54,554119 | 10,988557 | |
| 10 | 52,586703 | 3,700000 | NLASF44 |
| 11 | 35,893774 | 12,496658 | |
| 12 | 56,108740 | 8,641316 | NSF1 |
| 13 | 0,000000 | 26,631826 | |
| 14 | 0,000000 | 11,683115 | - |
| 15 | 61,705916 | 11,114398 | SFPL51 |
| 16 | -70,026143 | 1,631465 | |
| 17 | -200,648147 | 3,600000 | SLAH53 |
| 18 | 34,294956 | 12,905203 | SFPL53 |
| 19 | -48,773904 | 0,300000 | |
| 20 | -1634,003859 | 3,700000 | NLASF40 |
| 21 | 43,330919 | 10,819207 | SFPL53 |
| 22 | -84,305387 | 0,100000 | |
| 23 | 63,360404 | 11,621284 | SFPL51 |
| 24 | -44,079624 | 0,000000 | |
| 25 | 0,000000 | 35,553756 | - |

Asphärische Fläche Nr. 1:

| Asphärenart: | konische Konstante: |
|---|---|
| KSA | 0,000000000E+00 |

Asphärenkonstanten:

$c_1 = $ 2,037022717E-06
$c_2 = $ -5,369449900E-10
$c_3 = $ 1,625392430E-13
$c_4 = $ -1,343471905E-17

Asphärische Fläche Nr. 17:

| Asphärenart: | konische Konstante: |
|---|---|
| KSA | 0,000000000E+00 |

Asphärenkonstanten:

$c_1 = $ -5,280909907E-06
$c_2 = $ 1,504667518E-09
$c_3 = $ -8,408238291E-13
$c_4 = $ 8,471013661E-16

4. Objektiv (100) für eine Kamera (102) mit einem Gehäuse (104), einem an dem Gehäuse (104) angeordneten Stellelement (106), und einem in mehrere Einstellungen einstellbaren Linsensystem (108), wobei das Linsensystem (108) derart ausgebildet ist, dass in mindestens einer Einstellung eine Blendenzahl $F \leq 3$ ist, wobei das Linsensystem (108) des Weiteren derart ausgebildet ist, dass eine Betätigung des Stellelements (106) eine Bewegung zweier optischer Elemente (118, 120; 154, 156; 198, 200; 216, 218) relativ zueinander bewirkt, so dass eine Schnittweitendifferenz des Linsensystems (108) zur Kompensation eines durch einen in der Kamera (102) angeordneten Filter hervorgerufenen Öffnungsfehlers einstellbar ist, wobei das Linsensystem (108) eine objektseitig einer Aperturblende (158) angeordnete Fokussierungslinsengruppe (II) aufweist, wobei die zwei optischen Elemente (118, 120; 154, 156; 198, 200; 216, 218) durch zwei benachbarte Linsenelemente (154, 156) der Fokussierungslinsengruppe (II) gebildet sind, **dadurch gekennzeichnet, dass** die Fokussierungslinsengruppe (II) vier Linsenelemente (152, 153, 154, 156) aufweist, mit den folgenden Daten:

| Fläche Nr. | Radius [mm] | Dicke [mm] | Glasart |
|---|---|---|---|
| 1' | 143,300000 | 4,000000 | NSF10 |
| 2' | 0,000000 | 6,052053 | |
| 3' | -55,831000 | 3,300000 | NLASF44 |
| 4' | -124,090000 | 0,682471 | |
| 5' | 43,714000 | 4,200000 | NLASF44 |
| 6' | 33,497000 | 6,277940 | |
| 7' | 50,481000 | 9,700000 | NSF1 |
| 8' | -311,710000 | - | |

5. Objektiv nach Anspruch 4, **dadurch gekennzeichnet, dass** eine Betätigung des Stellelements (106) eine Bewegung der zwei optischen Elemente (118, 120; 154, 156; 198, 200; 216, 218) parallel zu einer optischen Achse (110) des Linsensystems (108) relativ zueinander bewirkt.

6. Objektiv nach Anspruch 4 oder 5, **dadurch gekennzeichnet, dass** die zwei optischen Elemente (118, 120; 154, 156; 198, 200; 216, 218) durch zwei benachbarte Linsenelemente (154, 156; 198, 200) des Linsensystems (108) gebildet sind, wobei eine Betätigung des Stellelements (106) eine Änderung eines Luftabstands (176; 212) zwischen den zwei benachbarten Linsenelementen (154, 156; 198, 200) bewirkt.

**7.** Objektiv nach einem der Ansprüche 4 bis 6, **dadurch gekennzeichnet, dass** das Linsensystem (108) die folgenden Daten aufweist:

Aperturfläche: 18

| Fläche Nr. | Radius [mm] | Dicke [mm] | Glasart |
|---|---|---|---|
| 1 | 90,116205 | 5,300000 | SPHM52 |
| 2 | 34,724000 | 21,419365 | |
| 3 | 120,570000 | 5,000000 | SFPL51 |
| 4 | 25,852000 | 11,707684 | |
| 5 | 220,670000 | 3,000000 | NSF57HT |
| 6 | 34,724000 | 11,951096 | |
| 7 | -44,668000 | 2,500000 | SFPL53 |
| 8 | 38,404000 | 16,100000 | NSK16 |
| 9 | -44,668000 | 2,500000 | |
| 10 | 143,300000 | 4,000000 | NSF10 |
| 11 | 0,000000 | 6,052053 | |
| 12 | -55,831000 | 3,300000 | NLASF44 |
| 13 | -124,090000 | 0,682471 | |
| 14 | 43,714000 | 4,200000 | NLASF44 |
| 15 | 33,497000 | 6,277940 | |
| 16 | 50,481000 | 9,700000 | NSF1 |
| 17 | -311,710000 | 17,211876 | |
| 18 | 0,000000 | 2,000000 | - |
| 19 | 116,310000 | 14,100000 | SFPL51 |
| 20 | -48,348000 | 0,300000 | |
| 21 | -183,481769 | 2,700000 | SLAH53 |
| 22 | 34,227000 | 1,921019 | |
| 23 | 42,474000 | 13,500000 | SFPL53 |
| 24 | -33,497000 | 0,300000 | |
| 25 | -530,880000 | 2,200000 | NLASF40 |
| 26 | 32,313000 | 11,500000 | SFPL53 |
| 27 | -58,294000 | 4,205019 | |
| 28 | 97,163000 | 11,800000 | SFPL51 |
| 29 | -34,724000 | 0,000000 | |
| 30 | 0,000000 | 36,397422 | - |

Asphärische Fläche Nr. 1:

| Asphärenart: | konische Konstante: |
|---|---|
| KSA | 0,000000000E+00 |

Asphärenkonstanten:

| | |
|---|---|
| $c_1=$ | 2,138410558E-06 |
| $c_2=$ | -7,813837178E-10 |
| $c_3=$ | 1,267806896E-12 |
| $c_4=$ | -1,341503588E-15 |
| $c_5=$ | 9,878056126E-19 |
| $c_6=$ | -3,869146575E-22 |
| $c_7=$ | 6,576152649E-26 |

Asphärische Fläche Nr. 21:

| Asphärenart: | konische Konstante: |
|---|---|
| KSA | 0,000000000E+00 |

Asphärenkonstanten:

| | |
|---|---|
| $c_1=$ | -1,002414545E-05 |
| $c_2=$ | 5,931864360E-10 |
| $c_3=$ | 7,136430627E-12 |

8. Objektiv nach einem der Ansprüche 4 bis 7, **dadurch gekennzeichnet, dass** das Linsensystem (108) des Weiteren derart ausgebildet ist, dass eine Betätigung des Stellelements (106) eine Änderung einer Brennweite des Linsensystems (108) bewirkt, so dass eine durch eine Änderung der Schnittweitendifferenz bewirkte Änderung der Brennweite kompensiert ist.

9. Verwendung eines Objektivs (100) nach einem der Ansprüche 1 bis 7 für eine Kamera (102), insbesondere für eine Digitalkamera, mit einem Gehäuse (104), einem an dem Gehäuse (104) angeordneten Stellelement (106), und einem in mehrere Einstellungen einstellbaren Linsensystem (108), wobei das Linsensystem (108) derart ausgebildet ist, dass in mindestens einer Einstellung eine Blendenzahl $F \leq 3$ ist, **dadurch gekennzeichnet, dass** das Linsensystem (108) des Weiteren derart ausgebildet ist, dass eine Betätigung des Stellelements (106) eine Bewegung zweier optischer Elemente (118, 120; 154, 156; 198, 200; 216, 218) relativ zueinander bewirkt, so dass eine Schnittweitendifferenz des Linsensystems (108) einstellbar ist, zur Kompensation eines durch einen in einer mit dem Objektiv (100) zu beaufschlagenden Kamera (102) angeordneten Filter hervorgerufenen Öffnungsfehlers.

**Claims**

1. Lens (100) for a camera (102) comprising a housing (104), an actuating element (106) arranged on the housing (104), and a lens element system (108) that can be set into a plurality of settings, wherein the lens element system (108) is embodied in such a way that in at least one setting an f-number is $F \leq 3$, wherein the lens element system (108) is furthermore embodied in such a way that an actuation of the actuating element (106) brings about a movement of two optical elements (118, 120; 154, 156; 198, 200; 216, 218) relative to one another, such that a vertex focal length difference of the lens element system (108) can be set for compensating for an aperture aberration caused by a filter arranged in the camera (102), **characterized in that** the lens element system (108) has a lens element group (III) arranged on the image side of an aperture stop (196), wherein the two optical elements (118, 120; 154, 156; 198, 200; 216, 218) are formed by two adjacent lens elements (198, 200) of the lens element group (III), and wherein a lens element (200) of the adjacent lens elements (198, 200) that is arranged on the image side is an aspheric lens element.

2. Lens according to Claim 1, **characterized in that** the aspheric lens element (200) is an aspheric cemented element (200, 202), having the following data

| Surface No. | Radius [mm] | Thickness [mm] | Type of glass |
|---|---|---|---|
| 1' | -200.648147 | 3.600000 | SLAH53 |
| 2' | 34.294956 | 12.905203 | SFPL53 |
| 3' | -48.773904 | | |

Aspheric surface No. 1:

Asphere type: conical constant:

KSA 0.000000000E+00

Asphere constants:

$c_1 =$      -5.280909907E-06
$c_2 =$      1.504667518E-09
$c_3 =$      -8.408238291E-13
$c_4 =$      8.471013661E-16

3. Lens according to Claim 2, **characterized in that** the lens element system (108) has the following data:
Aperture surface: 14

| Surface No. | Radius [mm] | Thickness [mm] | Type of glass |
|---|---|---|---|
| 1 | 180.119729 | 6.500000 | SPHM52 |
| 2 | 38.688375 | 20.002248 | |
| 3 | 171.010743 | 5.000000 | SFPL51 |
| 4 | 36.946638 | 8.836063 | |
| 5 | 77.611721 | 4.500000 | NSF57HT |
| 6 | 32.107934 | 15.773184 | |
| 7 | -43.084941 | 4.400000 | SFPL53 |
| 8 | 43.075059 | 16.399791 | NSK16 |
| 9 | -54.554119 | 10.988557 | |
| 10 | 52.586703 | 3.700000 | NLASF44 |
| 11 | 35.893774 | 12.496658 | |
| 12 | 56.108740 | 8.641316 | NSF1 |
| 13 | 0.000000 | 26.631826 | |
| 14 | 0.000000 | 11.683115 | - |
| 15 | 61.705916 | 11.114398 | SFPL51 |
| 16 | -70.026143 | 1.631465 | |
| 17 | -200.648147 | 3.600000 | SLAH53 |
| 18 | 34.294956 | 12.905203 | SFPL53 |
| 19 | -48.773094 | 0.300000 | |
| 20 | -1634.003859 | 3.700000 | NLASF40 |
| 21 | 43.330919 | 10.819207 | SFPL53 |

(continued)

| Surface No. | Radius [mm] | Thickness [mm] | Type of glass |
|---|---|---|---|
| 22 | -84.305387 | 0.100000 | |
| 23 | 63.360404 | 11.621284 | SFPL51 |
| 24 | -44.079624 | 0.000000 | |
| 25 | 0.000000 | 35.553756 | - |

Aspheric surface No. 1:

Asphere type:        conical constant:

KSA                      0.000000000E+00

Asphere constants:

$c_1 =$        2.037022717E-06

$c_2 =$        -5.369449900E-10

$c_3 =$        1.625392430E-13

$c_4 =$        -1.343471905E-17

Aspheric surface No. 17:

Asphere type:        conical constant:

KSA                      0.000000000E+00

Asphere constants:

$c_1 =$        -5.280909907E-06

$c_2 =$        1.504667518E-09

$c_3 =$        -8.408238291E-13

$c_4 =$        8.471013661E-16

4.  Lens (100) for a camera (102) comprising a housing (104), an actuating element (106) arranged on the housing (104), and a lens element system (108) that can be set into a plurality of settings, wherein the lens element system (108) is embodied in such a way that in at least one setting an f-number is $F \leq 3$, wherein the lens element system (108) is furthermore embodied in such a way that an actuation of the actuating element (106) brings about a movement of two optical elements (118, 120; 154, 156; 198, 200; 216, 218) relative to one another, such that a vertex focal length difference of the lens element system (108) can be set for compensating for an aperture aberration caused by a filter arranged in the camera (102), wherein the lens element system (108) has a focusing lens element group (II) arranged on the object side of an aperture stop (158), wherein the two optical elements (118, 120; 154, 156; 198, 200; 216, 218) are formed by two adjacent lens elements (154, 156) of the focusing lens element group (II), **characterized in that** the focusing lens element group (II) has four lens elements (152, 153, 154, 156), having the following data:

| Surface No. | Radius [mm] | Thickness [mm] | Type of glass |
|---|---|---|---|
| 1' | 143.300000 | 4.000000 | NSF10 |
| 2' | 0.000000 | 6.052053 | |
| 3' | -55.831000 | 3.300000 | NLASF44 |
| 4' | -124.090000 | 0.682471 | |
| 5' | 43.714000 | 4.200000 | NLASF44 |

(continued)

| Surface No. | Radius [mm] | Thickness [mm] | Type of glass |
|---|---|---|---|
| 6' | 33.497000 | 6.277940 | |
| 7' | 50.481000 | 9.700000 | NSF1 |
| 8' | -311.710000 | - | |

5. Lens according to Claim 4, **characterized in that** an actuation of the actuating element (106) brings about a movement of the two optical elements (118, 120; 154, 156; 198, 200; 216, 218) relative to one another parallel to an optical axis (110) of the lens element system (108).

6. Lens according to Claim 4 or 5, **characterized in that** the two optical elements (118, 120; 154, 156; 198, 200; 216, 218) are formed by two adjacent lens elements (154, 156; 198, 200) of the lens element system (108), wherein an actuation of the actuating element (106) brings about a change in an air clearance (176; 212) between the two adjacent lens elements (154, 156; 198, 200).

7. Lens according to any of Claims 4 to 6, **characterized in that** the lens element system (108) has the following data:
Aperture surface: 18

| Surface No. | Radius [mm] | Thickness [mm] | Type of glass |
|---|---|---|---|
| 1 | 90.116205 | 5.300000 | SPHM52 |
| 2 | 34.724000 | 21.419365 | |
| 3 | 120.570000 | 5.000000 | SFPL51 |
| 4 | 25.852000 | 11.707684 | |
| 5 | 220.670000 | 3.000000 | NSF57HT |
| 6 | 34.724000 | 11.951096 | |
| 7 | -44.668000 | 2.500000 | SFPL53 |
| 8 | 38.404000 | 16.100000 | NSK16 |
| 9 | -44.668000 | 2.500000 | |
| 10 | 143.300000 | 4.000000 | NSF10 |
| 11 | 0.000000 | 6.052053 | |
| 12 | -55.831000 | 3.300000 | NLASF44 |
| 13 | -124.090000 | 0.682471 | |
| 14 | 43.714000 | 4.200000 | NLASF44 |
| 15 | 33.497000 | 6.277940 | |
| 16 | 50.481000 | 9.700000 | NSF1 |
| 17 | -311.710000 | 17.211876 | |
| 18 | 0.000000 | 2.000000 | - |
| 19 | 116.310000 | 14.100000 | SFPL51 |
| 20 | -48.348000 | 0.300000 | |
| 21 | -183.481769 | 2.700000 | SLAH53 |
| 22 | 34.227000 | 1.921019 | |
| 23 | 42.474000 | 13.500000 | SFPL53 |
| 24 | -33.497000 | 0.300000 | |
| 25 | -530.880000 | 2.200000 | NLASF40 |

(continued)

| Surface No. | Radius [mm] | Thickness [mm] | Type of glass |
|---|---|---|---|
| 26 | 32.313000 | 11.500000 | SFPL53 |
| 27 | -58.294000 | 4.205019 | |
| 28 | 97.163000 | 11.800000 | SFPL51 |
| 29 | -34.724000 | 0.000000 | |
| 30 | 0.000000 | 36.397422 | - |

Aspheric surface No. 1:

Asphere type: conical constant:
KSA 0.000000000E+00

Asphere constants:
$c_1$ = 2.138410558E-06
$c_2$ = -7.813837178E-10
$c_3$ = 1.267806896E-12
$c_4$ = -1.341503588E-15
$c_5$ = 9.878056126E-19
$c_6$ = -3.869146575E-22
$c_7$ = 6.576152649E-26

Aspheric surface No. 21:

Asphere type: conical constant:
KSA 0.000000000E+00

Asphere constants:
$c_1$ = -1.002414545E-05
$c_2$ = 5.931864360E-10
$c_3$ = 7.136430627E-12

8. Lens according to any of Claims 4 to 7, **characterized in that** the lens element system (108) is furthermore embodied in such a way that an actuation of the actuating element (106) brings about a change in a focal length of the lens element system (108), such that a change in the focal length brought about by a change in the vertex focal length difference is compensated for.

9. Use of a lens (100) according to any of Claims 1 to 7 for a camera (102), more particularly for a digital camera, comprising a housing (104), an actuating element (106) arranged on the housing (104), and a lens element system (108) that can be set into a plurality of settings, wherein the lens element system (108) is embodied in such a way that in at least one setting an f-number is $F \leq 3$, **characterized in that** the lens element system (108) is furthermore embodied in such a way that an actuation of the actuating element (106) brings about a movement of two optical elements (118, 120; 154, 156; 198, 200; 216, 218) relative to one another, such that a vertex focal length difference of the lens element system (108) can be set, for compensating for an aperture aberration caused by a filter arranged in a camera (102), to which the lens (100) is to be applied.

**Revendications**

1. Objectif (100) pour une caméra (102), comprenant un boîtier (104), un élément de commande (106) disposé au niveau du boîtier (104), et un système de lentilles (108) réglable en plusieurs réglages, le système de lentilles (108) étant configuré de telle sorte que dans au moins réglage, une valeur de diaphragme est F ≤ 3, le système de lentilles (108) étant en outre configuré de telle sorte qu'un actionnement de l'élément de commande (106) produit un mouvement de deux éléments optiques (118, 120 ; 154, 156 ; 198, 200, 216, 218) l'un par rapport à l'autre, de sorte qu'une différence de tirages optiques du système de lentilles (108) servant à la compensation d'une erreur d'ouverture provoquée par un filtre disposé dans la caméra (102) est réglable, **caractérisé en ce que** le système de lentilles (108) possède un groupe de lentilles (III) disposé du côté image d'un diaphragme d'ouverture (196), les deux éléments optiques (118, 120 ; 154, 156 ; 198, 200, 216, 218) étant formés par deux éléments de lentille (198, 200) voisins du groupe de lentilles (III), et un élément de lentille (200) des éléments de lentille (198, 200) voisins disposé du côté image étant un élément de lentille asphérique.

2. Objectif selon la revendication 1, **caractérisé en ce que** l'élément de lentille asphérique (200) est un élément cimenté (200, 202) ayant les caractéristiques suivantes

| N° de surface | Rayon (mm) | Épaisseur (mm) | Type de verre |
|---|---|---|---|
| 1' | -200,6481467 | 3,600000 | SLAH53 |
| 2' | 34,294956 | 12,905203 | SFPL53 |
| 3' | -48,773904 | | |

Surface asphérique N° 1' :

Type asphérique :  Constante conique :
KSA  0,000000000E+00

Constantes asphériques :
$C_1 = -5,280909907E-06$
$C_2 = 1,504667518E-09$
$C_3 = -8,408238291E-13$
$C_4 = 8,471013661E-16$

3. Objectif selon la revendication 2, **caractérisé en ce que** le système de lentilles (108) possède les caractéristiques suivantes :
Surface d'ouverture : 14

| N° de surface | Rayon (mm) | Épaisseur (mm) | Type de verre |
|---|---|---|---|
| 1 | 180,119729 | 6,500000 | SHPM52 |
| 2 | 38,688375 | 20,002248 | |
| 3 | 171,010743 | 5,000000 | SFPL51 |
| 4 | 36,946638 | 8,836063 | |
| 5 | 77,611721 | 4,500000 | NSF57HT |
| 6 | 32,107934 | 15,773184 | |
| 7 | -43,084941 | 4,400000 | SFPL53 |
| 8 | 43,075059 | 16,399791 | NSK16 |
| 9 | -54,554119 | 10,988557 | |
| 10 | 52,586703 | 3,700000 | NLASF44 |
| 11 | 35,893774 | 12,496658 | |
| 12 | 56,107740 | 8,641316 | NSF1 |

(suite)

| N° de surface | Rayon (mm) | Épaisseur (mm) | Type de verre |
|---|---|---|---|
| 13 | 0,000000 | 26,631826 | |
| 14 | 0,000000 | 11,683115 | - |
| 15 | 61,705916 | 11,114398 | SFPL51 |
| 16 | -70,026143 | 1,631465 | |
| 17 | -200,648147 | 3,600000 | SLAH53 |
| 18 | 34,294956 | 12,905203 | SFPL53 |
| 19 | -48,773904 | 0,300000 | |
| 20 | -1634,003859 | 3,700000 | NLASF40 |
| 21 | 43,330919 | 10,819207 | SFPL53 |
| 22 | -84,305387 | 0,100000 | |
| 23 | 63,360404 | 11,621284 | SFPL51 |
| 24 | -44,079624 | 0,000000 | |
| 25 | 0,000000 | 35,553756 | - |

Surface asphérique N° 1 :

Type asphérique :                    Constante conique :
KSA                                  $0,000000000E+00$

Constantes asphériques :
$C_1 = 2,037022717E-06$
$C_2 = -5,369449900E-10$
$C_3 = 1,625392430E-13$
$C_4 = -1,343471905E-17$

Surface asphérique N° 17 :

Type asphérique :                    Constante conique :
KSA                                  $0,000000000E+00$

Constantes asphériques :
$C_1 = -5,280909907E-06$
$C_2 = 1,504667518E-09$
$C_3 = -8,408238291E-13$
$C_4 = 8,471013661E-16$

**4.** Objectif (100) pour une caméra (102), comprenant un boîtier (104), un élément de commande (106) disposé au niveau du boîtier (104), et un système de lentilles (108) réglable en plusieurs réglages, le système de lentilles (108) étant configuré de telle sorte que dans au moins réglage, une valeur de diaphragme est F ≤ 3, le système de lentilles (108) étant en outre configuré de telle sorte qu'un actionnement de l'élément de commande (106) produit un mouvement de deux éléments optiques (118, 120 ; 154, 156 ; 198, 200, 216, 218) l'un par rapport à l'autre, de sorte qu'une différence de tirages optiques du système de lentilles (108) servant à la compensation d'une erreur d'ouverture produite par un filtre disposé dans la caméra (102) est réglable, le système de lentilles (108) possédant un groupe de lentilles de mise au point (II) disposé du côté objet d'un diaphragme d'ouverture (158), les deux éléments optiques (118, 120 ; 154, 156 ; 198, 200, 216, 218) étant formés par deux éléments de lentille (154, 156) voisins du groupe de lentilles de mise au point (II), **caractérisé en ce que** le groupe de lentilles de mise au point (II) possède quatre éléments de lentille (152, 153, 154, 156) ayant les caractéristiques suivantes

| N° de surface | Rayon (mm) | Épaisseur (mm) | Type de verre |
|---|---|---|---|
| 1' | 143,300000 | 4,000000 | NSF10 |
| 2' | 0,000000 | 6,052053 | |
| 3' | -55,931000 | 3,300000 | NLASF44 |
| 4' | -124,090000 | 0,682471 | |
| 5' | 43,714000 | 4,200000 | NLASF44 |
| 6' | 33,497000 | 6,277940 | |
| 7' | 50,481000 | 9,700000 | NSF1 |
| 8' | -311,710000 | - | |

5. Objectif selon la revendication 4, **caractérisé en ce qu'**un actionnement de l'élément de commande (106) produit un mouvement de deux éléments optiques (118, 120 ; 154, 156 ; 198, 200, 216, 218) l'un par rapport à l'autre parallèlement à un axe optique (110) du système de lentilles (108).

6. Objectif selon la revendication 4 ou 5, **caractérisé en ce que** les deux éléments optiques (118, 120 ; 154, 156 ; 198, 200, 216, 218) sont formés par deux éléments de lentille (154, 156 ; 198, 200) du système de lentilles (108), un actionnement de l'élément de commande (106) produisant une modification de la distance dans l'air (176 ; 212) entre les deux éléments de lentille (154, 156 ; 198, 200) voisins.

7. Objectif selon l'une des revendications 4 à 6, **caractérisé en ce que** le système de lentilles (108) possède les caractéristiques suivantes :
Surface d'ouverture : 18

| N° de surface | Rayon (mm) | Épaisseur (mm) | Type de verre |
|---|---|---|---|
| 1 | 90,116205 | 5,300000 | SHPM52 |
| 2 | 34,724000 | 21,419365 | |
| 3 | 120,570000 | 5,000000 | SFPL51 |
| 4 | 25,852000 | 11,707684 | |
| 5 | 220,670000 | 3,000000 | NSF57HT |
| 6 | 34,724000 | 11,951096 | |
| 7 | -44,668000 | 2,500000 | SFPL53 |
| 8 | 38,404000 | 16,100000 | NSK16 |
| 9 | -44,668000 | 2,500000 | |
| 10 | 143,300000 | 4,000000 | NSF10 |
| 11 | 0,000000 | 6,052053 | |
| 12 | -55,931000 | 3,300000 | NLASF44 |
| 13 | -124,090000 | 0,682471 | |
| 14 | 43,714000 | 4,200000 | NLASF44 |
| 15 | 33,497000 | 6,277940 | |
| 16 | 50,481000 | 9,700000 | NSF1 |
| 17 | -311,710000 | 17,211876 | |

(suite)

| N° de surface | Rayon (mm) | Épaisseur (mm) | Type de verre |
|---|---|---|---|
| 18 | 0,000000 | 2,000000 | - |
| 19 | 116,310000 | 14,100000 | SFPL51 |
| 20 | -48,348000 | 0,300000 | |
| 21 | -183,481769 | 2,700000 | SLAH53 |
| 22 | 34,228000 | 1,921019 | |
| 23 | 42,474000 | 13,500000 | SFPL53 |
| 24 | -33,497000 | 0,300000 | |
| 25 | -530,880000 | 2,200000 | NLASF40 |
| 26 | 32,313000 | 11,500000 | SFPL53 |
| 27 | -58,294000 | 4,205019 | |
| 28 | 97,163000 | 11,800000 | SFPL51 |
| 29 | -34,724000 | 0,000000 | |
| 30 | 0,000000 | 36,397422 | - |

Surface asphérique N° 1 :

Type asphérique :          Constante conique :
KSA                        0,000000000E+00

Constantes asphériques :
$C_1$ = 2,138410558E-06
$C_2$ = -7,813837178E-10
$C_3$ = 1,267806896E-12
$C_4$ = -1,341503588E-15
$C_5$ = 9,878053126E-19
$C_6$ = -3,869146575E-22
$C_7$ = 6,576152649E-26

Surface asphérique N° 21 :

Type asphérique :          Constante conique :
KSA                        0,000000000E+00

Constantes asphériques :
$C_1$ = -1,002414545E-05
$C_2$ = 5,931864360E-10
$C_3$ = 7,136430627E-12

8. Objectif selon l'une des revendications 4 à 6, **caractérisé en ce que** le système de lentilles (108) est en outre configuré de telle sorte qu'un actionnement de l'élément de commande (106) produit une modification de la distance focale du système de lentilles (108), de sorte qu'une modification de la distance focale produite par une modification de la différence de tirages optiques est compensée.

9. Utilisation d'un objectif (100) selon l'une des revendications 4 à 7 pour une caméra (102), notamment pour une caméra numérique, comprenant un boîtier (104), un élément de commande (106) disposé au niveau du boîtier (104), et un système de lentilles (108) réglable en plusieurs réglages, le système de lentilles (108) étant configuré de telle sorte que dans au moins réglage, une valeur de diaphragme est F ≤ 3, **caractérisé en ce que** le système de lentilles (108) est en outre configuré de telle sorte qu'un actionnement de l'élément de commande (106) produit un mouvement de deux éléments optiques (118, 120 ; 154, 156 ; 198, 200, 216, 218) l'un par rapport à l'autre, de sorte qu'une différence de tirages optiques du système de lentilles (108) est réglable en vue de compenser une erreur d'ouverture provoquée par un filtre disposé dans une caméra (102) à alimenter avec l'objectif (100).

Fig. 1

Fig. 2

EP 2 549 323 B1

Fig. 3

Fig. 4

EP 2 549 323 B1

Fig. 5b

Fig. 5a

35

Fig. 6

EP 2 549 323 B1

KW = FD*0,0537
KW Kompensationsweg
FD Filterdicke

Fig. 7

Fig. 8

EP 2 549 323 B1

Fig. 9a                                    Fig. 9b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090052064 A1
- DE 10028233 A1
- DE 3030205 A1
- JP 55055309 A
- EP 0859259 A2
- US 4965630 A
- US 5311362 A
- JP 2007266186 A
- JP 2003029317 A
- DE 3812745 A1
- WO 9502842 A1
- DE 3113802 A1
- DE 19845485 A1